# EUROPEAN PATENT SPECIFICATION

(11) **EP 2 792 563 B1**
(45) Date of publication and mention of the grant of the patent: **18.11.2020**
(21) Application number: 11868860.5
(22) Date of filing: 15.12.2011
(51) Int. Cl.: B60W 10/10, B60K 6/445, B60K 6/48, B60K 6/54, B60W 10/06, B60W 20/00, B60W 50/14

(54) **HYBRID VEHICLE CONTROL APPARATUS**
STEUERVORRICHTUNG FÜR EIN HYBRIDFAHRZEUG
APPAREIL DE GESTION D'UN VÉHICULE HYBRIDE

(43) Date of publication of application: 22.10.2014
(73) Proprietor: Toyota Jidosha Kabushiki Kaisha, Toyota-shi, Aichi 471-8571 (JP)
(72) Inventor: SATO Keita, Toyota-shi Aichi 471-8571 (JP); FUKUSHIRO Eiji, Toyota-shi Aichi 471-8571 (JP)
(74) Representative: Cabinet Beau de Loménie
(86) International application number: PCT/JP2011/079086
(87) International publication number: WO 2013/088558

(56) References cited:
- EP-A2- 1 930 631
- WO-A1-2011/135697
- WO-A1-2011/135697
- DE-A1-102010 003 673
- JP-A- 2001 027 321

## Description

### [Technical Field]

The present invention relates to a controller for a hybrid vehicle.

### [Background Art]

Due to environmental protection concerns, recent years have seen increased demand for a reduction in the volume of exhaust gases emitted from engines (internal combustion engines) installed in vehicles as well as improvement in specific fuel consumption (fuel economy). Hybrid vehicles have been developed and put to practical use as vehicles that satisfy such a demand.

Hybrid vehicles, which are equipped with an engine and an electric motor (e.g., motor generator or motor) driven by electrical power generated using the output of the engine and electrical power stored in a battery (electrical storage device), are capable of travel using either the engine or motor alone, or both at the same time, as a travel power source.

Due to the fact that such hybrid vehicles permit motor-driven travel, during which travel is effected under the power of the electric motor alone (hereinafter referred to as EV travel), the operation may be intermittent operation where the operation of the engine is temporarily stopped while the vehicle is in motion (engine shutdown and engine restart are intermittently repeated) may be performed.

In addition, such vehicles, i.e. hybrid vehicles and the like, include vehicles that allow for the manual shifting mode (sequential mode) to be selected. Such vehicles are equipped with a gear shift indication device (commonly referred to as a gear shift indicator (GSI)), which provides gear shifting instructions (gear shifting directions) that prompt the driver to shift (upshift, downshift) gears when a gear step different from the correct gear step (recommended gear step) capable of improving specific fuel consumption (fuel economy) etc. is selected during travel in the manual shifting mode.

It should be noted that, as described in Patent Literature 1 listed below, there is a technology relating to a gear shift indicator that provides prompts for manual transmission shifting in a hybrid vehicle. In the technology described in Patent Literature 1, when the temperature of the inverter that supplies electrical power to the motor (electric motor) becomes elevated, excessive temperature rise in the inverter is minimized by prompting the driver to perform a gear shift operation (an upshift) that shifts the transmission to the higher-step side (the side where the transmission ratio is smaller).

### [Citation List]

### [Patent Literature]

[PTL 1] JP 2004-257511A
[PTL 2] JP 2004-028280A

In addition, a controller for a vehicle having an internal combustion engine is disclosed by document DE 10 2010 003 673, and a controller for a hybrid vehicle is disclosed by document WO 2011/135697.

### [Disclosure of Invention]

### [Technical Problems]

Incidentally, although hybrid vehicles permit EV travel in the manual shifting mode, as well as when engine shutdown is allowed (when intermittent operation is allowed), the engine is sometimes brought into an operational state in response to conditions determined by a manually selected gear step (transmission ratio) (for example, when the manually selected gear step is a gear step prohibiting intermittent engine operation). In such a situation, fuel economy may deteriorate because the engine is operated.

It should be noted that the technology described in the above-mentioned Patent Literature 1 prompts the driver to upshift when the temperature of the inverter becomes elevated and does not consider gear shifting instructions in the manual shifting mode for EV travel-enabled hybrid vehicles.

The present invention was made by taking such circumstances into consideration and it is an object of the invention to provide a controller capable of improving fuel economy in the manual shifting mode in hybrid vehicles that permit switching to the manual shifting mode.

### [Means for Solving the Problems]

The present invention resides in a controller for a hybrid vehicle as defined by claim 1, the hybrid vehicle including an engine capable of outputting power for travel, an electric motor capable of outputting power for travel, a power transmission system capable of power transmission to the driving wheels along with manual selection of gear steps, and a gear shift indicator that prompts the driver to change said gear steps. A technical feature of the invention consists in the fact that, in such a hybrid vehicle controller, the gear shift indicator prompts the driver to change to a gear step that allows for the engine to be shut down during the manual shifting mode, in which gear steps are shifted manually.

More specifically, a technical feature of the invention is the fact that, when the engine is operational during the manual shifting mode, in which gear steps are shifted manually, the driver is prompted by the gear shift indicator to change to a gear step that allows for the engine to be shut down, and if the current gear step of the power transmission system is a gear step that allows for the engine to be shut down, the engine is shut down and the vehicle is switched to motor-driven travel (EV travel), during which travel is accomplished under the power of the electric motor alone.

It should be noted that in the present invention, the term "gear step" is defined as an "operating state that the driver switches to using a manual operation". Specifically, as used in the present invention, the term "gear step" includes transmission ratios fixed in the respective steps (gear steps) and transmission ratios having certain ranges in the respective steps. In addition, the term "transmission ratios having certain ranges" refers to linear ranges, such as those used in automatic gear shifting, or to the stepped ranges of stepped gear shifting and range holds (range holds will be discussed below). In addition, as far as the concept of "steps" in the case of range holds is concerned, for example, in vehicles having ranges for increasing the braking power of engine braking (engine braking ranges; B-ranges), such B-ranges are also included in the concept of the word "steps".

According to the invention, in the manual shifting mode, the driver is prompted to change to a gear step that allows for the engine to be shut down, and, as a result, the driver manually shifts gears in response to the gear shifting instructions (gear shifting directions), thereby allowing for the travel state to be switched to EV travel. As a result, travel with the engine in an operational state can be minimized and an improvement in fuel economy can be achieved.

In the present invention, the gear shift indicator may be adapted to issue gear shifting instructions that allow for the EV travel state to be continued during EV travel in the manual shifting mode.

In the present invention, if the engine is shut down when the gear step is a gear step, in which engine shutdown is allowed (if the automatic shutdown conditions have been met), a prompt is provided to change to a gear step, in which engine shutdown is allowed, and if the engine is not shut down even though it is in a gear step, in which engine shutdown is allowed (if fuel economy effects cannot be obtained), a prompt is provided for a change of a different type than the change described above. This makes it possible to eliminate gear shifting instructions that are unlikely to produce fuel economy effects.

Specific implementations of the present invention can include an implementation, in which a gear step that allows for the engine to be shut down is set and the gear shift indicator provides a prompt to change to the gear step when the vehicle state of the hybrid vehicle enters a region allowing for the engine to be shut down.

In the present invention, specific implementations of a power transmission system capable of gear-shifting in the manual shifting mode can include an implementation, in which there is provided a continuously variable transmission mechanism that makes it possible to switch transmission ratios in a continuously variable manner and, in the manual shifting mode, the transmission ratios set by the continuously variable transmission mechanism can be switched in multiple steps.

In the present invention, specific implementations of the hybrid vehicle can include an implementation, wherein there is provided a power splitting mechanism made up of a planetary gear mechanism including a planetary carrier coupled to an output shaft of the engine, a sun gear coupled to a first electric motor (first motor generator MG1), and a ring gear coupled to a second electric motor (second motor generator MG2), and transmission ratios in the power transmission system can be changed by changing the rotational speed of the engine by means of controlling the rotational speed of the first electric motor.

In addition, other specific implementations of the hybrid vehicle can include an implementation, in which there is provided an engine and an electric motor, and a stepped transmission that allows for manual selection of gear steps is provided in the powertrain between the electric motor and the driving wheels.

In the hybrid vehicle of the present invention, the driver is prompted to change to a gear step that allows for the engine to be shut down only if the acceleration requirements of the vehicle are low or if it is estimated that the low acceleration requirement conditions are highly likely to continue. More specifically, if the speed of the hybrid vehicle is low, the required driving force is low, the hybrid vehicle is traveling in a steady manner, and the travel mode is a non-power mode or the EV switch is ON, it is determined that the low acceleration requirement conditions are highly likely to continue and the driver is prompted to change to a gear step that allows for the engine to be shut down.

If such an implementation is used, the operating point of the electric motor no longer falls within the EV travel-disabled region when the transmission is shifted to an engine shutdown-permitting gear step. This makes it possible to avoid situations, in which the engine is started immediately upon switching to EV travel.

### [Effects of the Invention]

According to the present invention, in the manual shifting mode, the driver is prompted to change to a gear step that allows for the engine to be shut down, which makes it possible to improve fuel economy.

### [Brief Description of Drawings]

[FIG. 1]

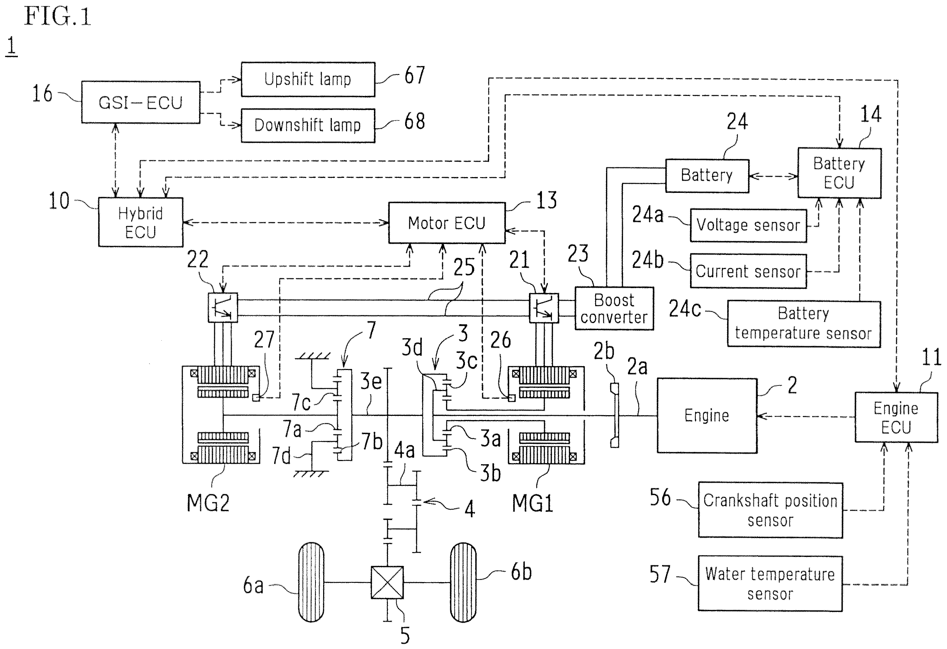

   FIG. 1 is a schematic block diagram illustrating an exemplary hybrid vehicle utilizing the present invention.
[FIG. 2]

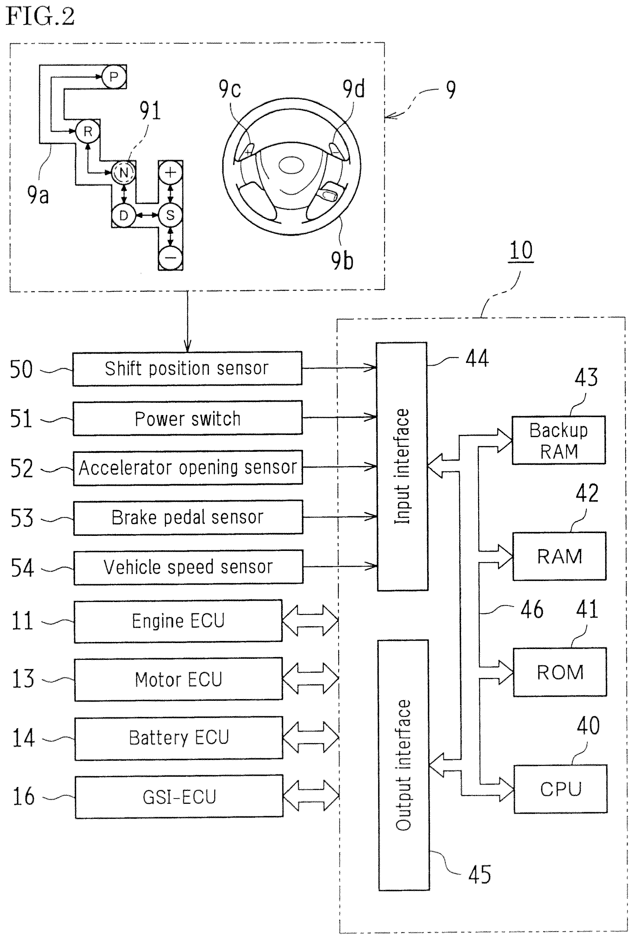

   FIG. 2 is a block diagram overview of the control system of the hybrid vehicle of FIG. 1.
[FIG. 3]

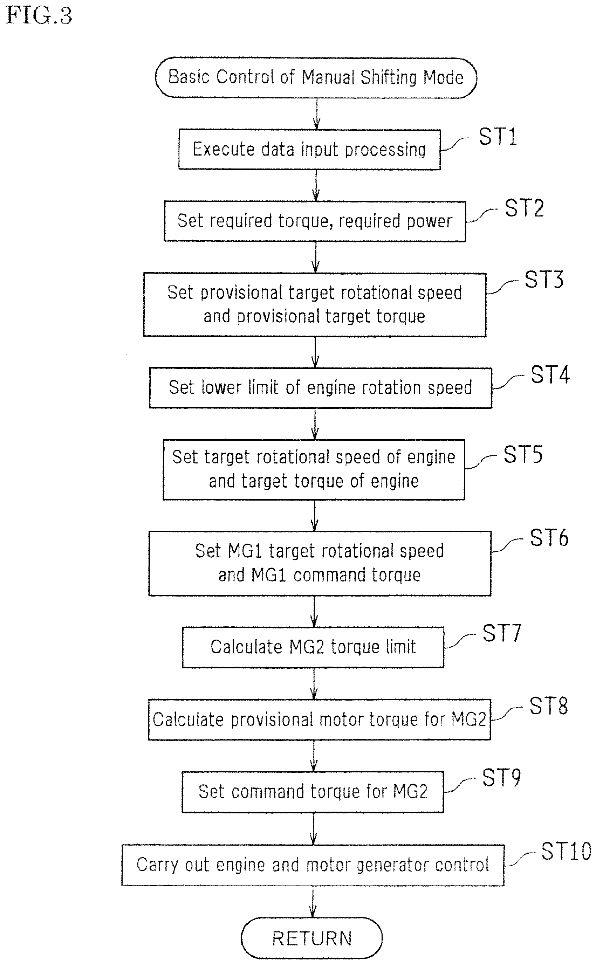

   FIG. 3 is a flowchart illustrating a basic control procedure used in the manual shifting mode.
[FIG. 4]

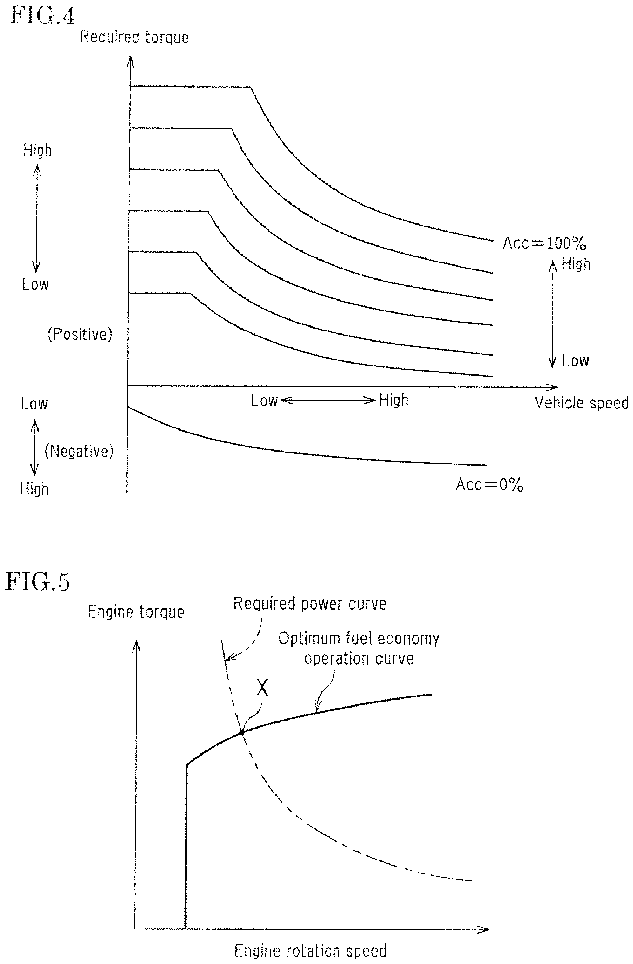

   FIG. 4 is a diagram illustrating a required torque configuration map.
[FIG. 5]
   FIG. 5 is a diagram illustrating an example of a required power curve and an optimum fuel economy operation curve of an engine.
[FIG. 6]

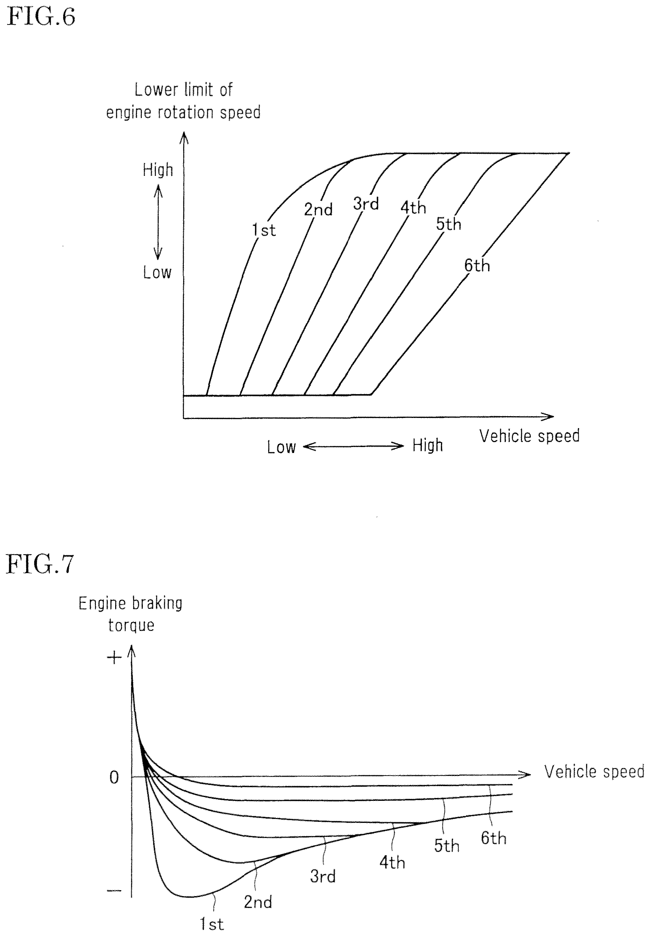

   FIG. 6 is a diagram illustrating an engine rotation speed lower limit configuration map.
[FIG. 7]
   FIG. 7 is a diagram illustrating engine brake characteristics obtained for various vehicle speeds and gear steps.
[FIG. 8]

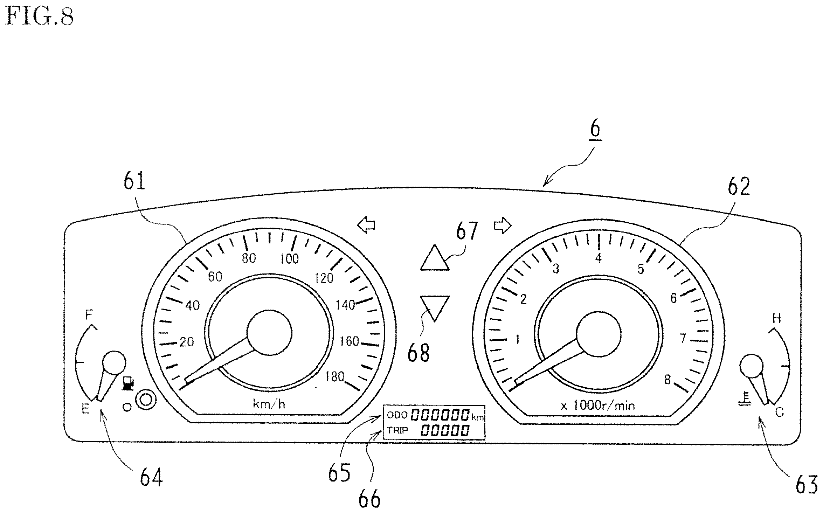

   FIG. 8 is a diagram illustrating a combination meter installed aboard a hybrid vehicle.
[FIG. 9]

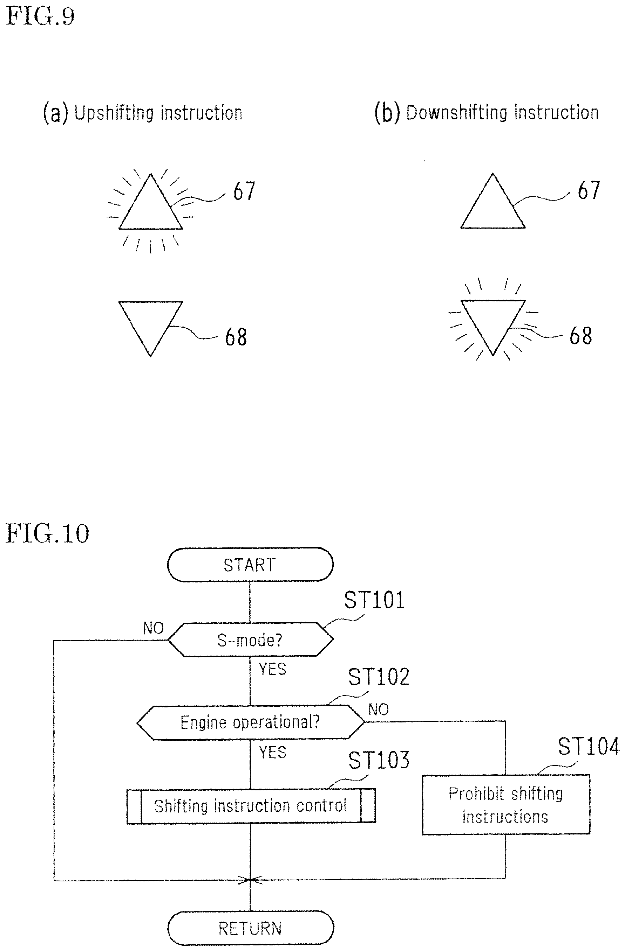

   FIG. 9 is a diagram illustrating an upshift lamp and a downshift lamp in an illuminated state, wherein FIG. 9(a) indicates upshifting instruction and FIG. 9(b) indicates downshifting instruction, respectively.
[FIG. 10]
   FIG. 10 is a flowchart illustrating an example of shifting instruction control in the S-mode.
[FIG. 11]

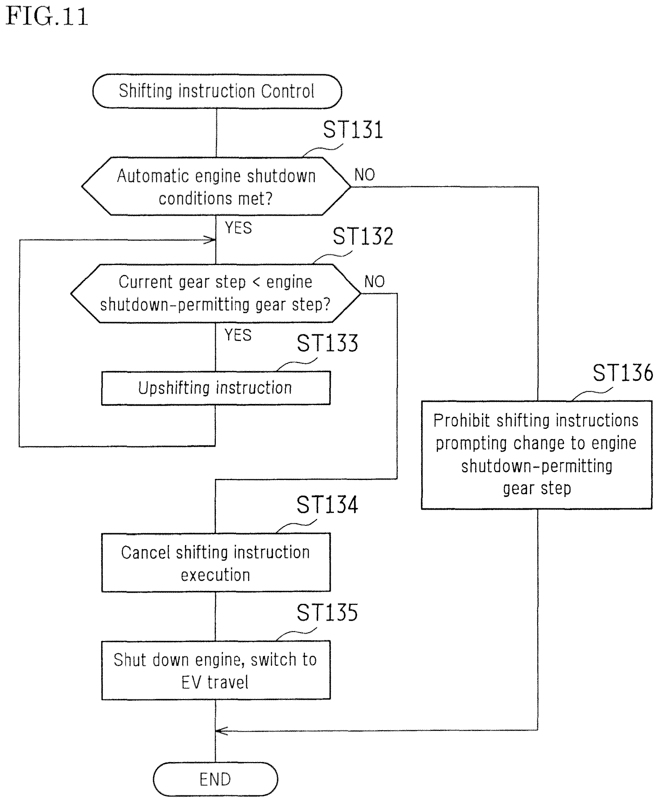

   FIG. 11 is a flowchart illustrating an example of shifting instruction control in the S-mode.
[FIG. 12]

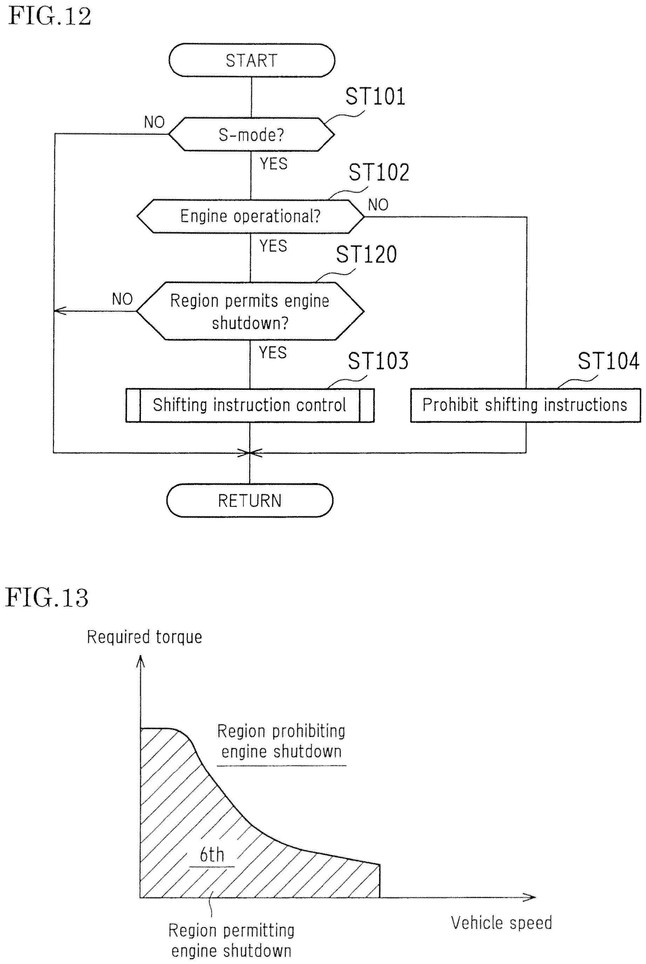

   FIG. 12 is a flowchart illustrating another example of shifting instruction control in the S-mode.
[FIG. 13]
   FIG. 13 is a diagram illustrating an exemplary map used for shifting instruction control in the S-mode.
[FIG. 14]

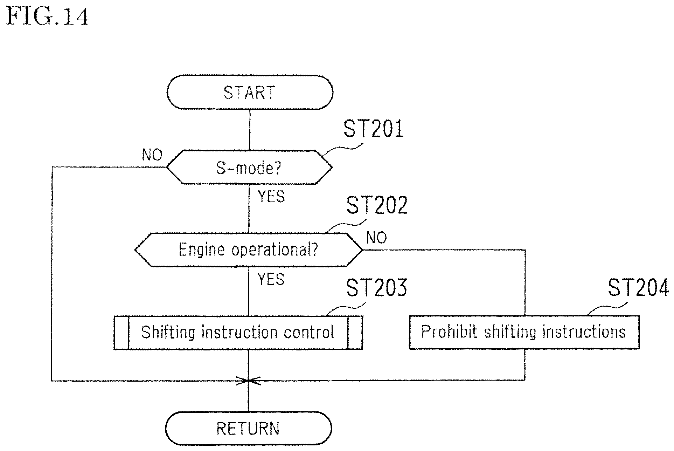

   FIG. 14 is a flowchart illustrating another example of shifting instruction control in the S-mode.
[FIG. 15]

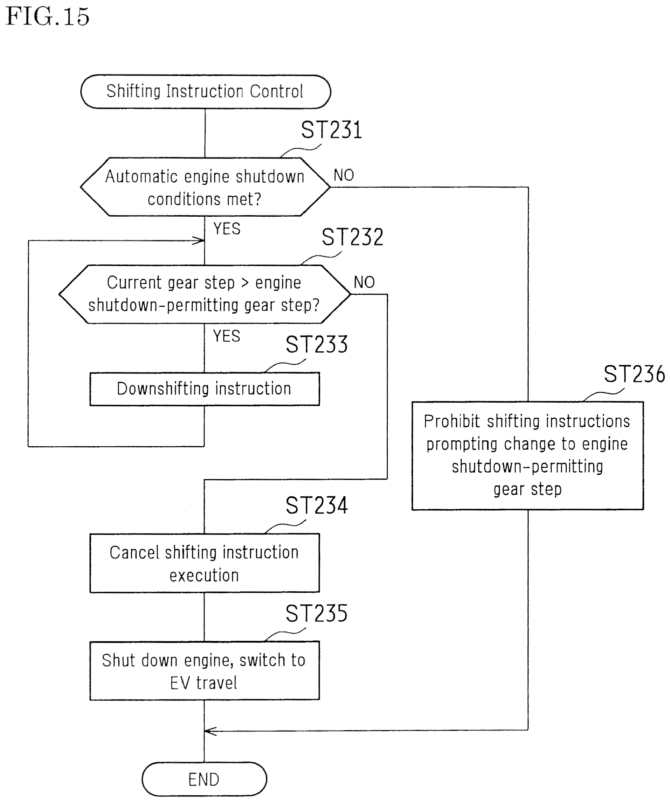

   FIG. 15 is a flowchart illustrating another example of shifting instruction control in the S-mode.
[FIG. 16]

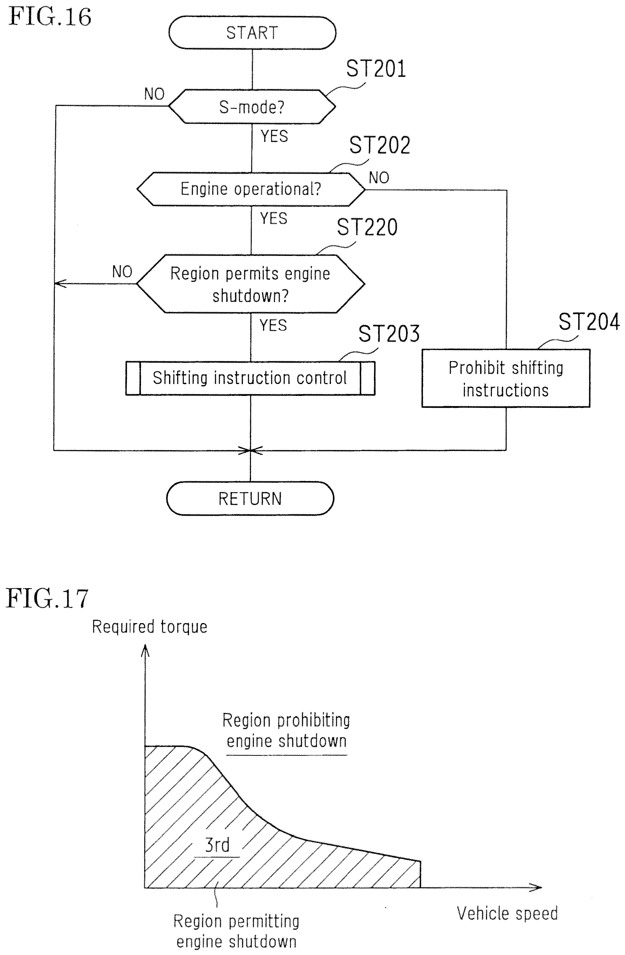

   FIG. 16 is a flowchart illustrating another example of shifting instruction control in the S-mode.
[FIG. 17]
   FIG. 17 is a diagram illustrating another exemplary map used for shifting instruction control in the S-mode.
[FIG. 18]

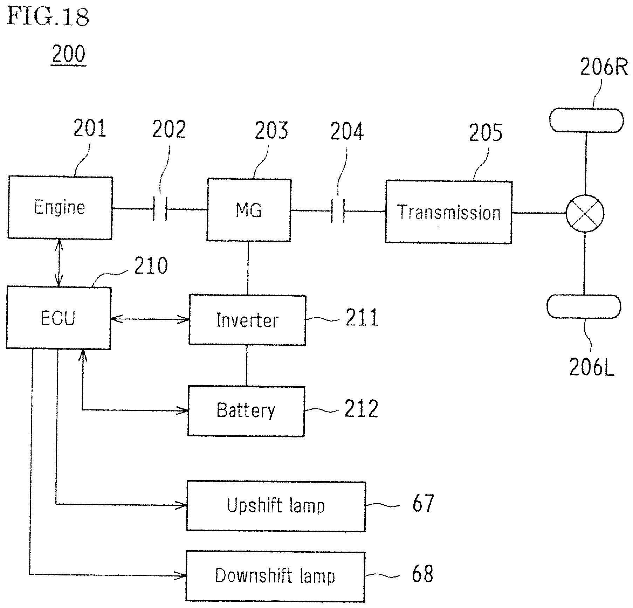

   FIG. 18 is a schematic block diagram illustrating another exemplary hybrid vehicle utilizing the present invention.
[FIG. 19]

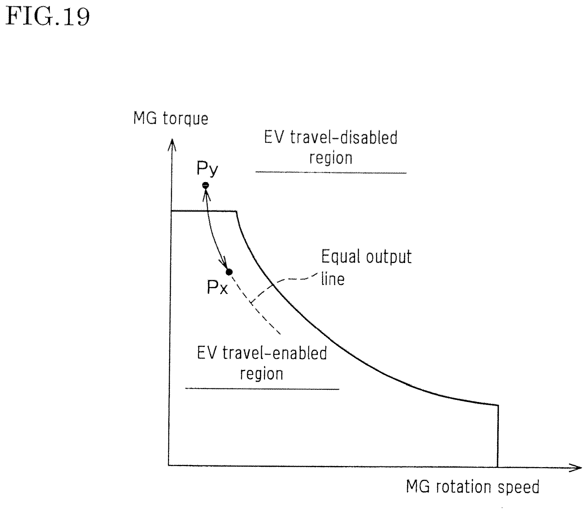

   FIG. 19 is a characteristic plot of a motor generator.

### [Modes for Carrying Out the Invention]

Below, embodiments of the present invention will be described with reference to drawings.

### [Embodiment 1]

FIG. 1 is a schematic block diagram illustrating an exemplary hybrid vehicle utilizing the present invention.

A hybrid vehicle 1 illustrated in FIG. 1 is a FF (front engine/front drive)-type hybrid vehicle 1. Its drive system, which is used to provide driving force to driving wheels (front wheels) 6a, 6b, includes: an engine 2; a tri-axial power splitting mechanism 3, which is connected to a crankshaft 2a serving as an output shaft of the engine 2 through a dumper 2b; a first motor generator MG1 capable of generating electricity, which is connected to this power splitting mechanism 3; and a second motor generator MG2, which is connected via a reduction mechanism 7 to a ring gear shaft 3e serving as a drive shaft connected to the power splitting mechanism 3. As used in the present invention, the "power transmission system" is made up of the crankshaft 2a, power splitting mechanism 3, first motor generator MG1, second motor generator MG2, reduction mechanism 7, and ring gear shaft 3e.

In addition, the above-mentioned ring gear shaft 3e is connected to the driving wheels 6a, 6b through a gearing mechanism 4 and a differential gear 5 used for the front wheels.

In addition, this hybrid vehicle 1 is provided with a hybrid electronic control unit (hereinafter referred to as "hybrid ECU" (Electronic Control Unit)) 10, which controls the entire drive system of the vehicle.

### - Engine and Engine ECU -

The engine 2 is an internal combustion engine that outputs power using hydrocarbon fuel such as gasoline or gas oil, and operating control, such as fuel injection control, ignition control, and intake air volume adjustment control is performed by an engine electronic control unit (hereinafter referred to as "engine ECU") 11 that accepts signals from various sensors detecting the operating state of the engine 2 as input.

The engine ECU 11 communicates with the hybrid ECU 10 and, along with providing operating control over the engine 2 based on the control signals from this hybrid ECU 10, outputs data regarding the operating state of the engine 2 to the hybrid ECU 10 as the occasion demands. It should be noted that a crankshaft position sensor 56, a water temperature sensor 57, and the like are connected to the engine ECU 11. The crankshaft position sensor 56 outputs a detection signal (pulse) whenever the crankshaft 2a rotates through a certain angle. The engine ECU 11 computes the engine rotation speed Ne based on the output signal from this crankshaft position sensor 56. In addition, the water temperature sensor 57 outputs a detection signal corresponding to the temperature of the coolant in the engine 2.

### - Power Splitting Mechanism -

As shown in FIG. 1, the power splitting mechanism 3 is configured as a planetary gear mechanism that is provided with an externally toothed sun gear 3a; an internally toothed ring gear 3b, which is disposed concentrically with this sun gear 3a; multiple pinion gears 3c which, along with being meshed with the sun gear 3a, are meshed with the ring gear 3b; and a planetary carrier 3d, which holds these multiple pinion gears 3c for free rotation and revolution. The mechanism uses the sun gear 3a, ring gear 3b, and planetary carrier 3d as rotary elements and produces a differential action. In this power splitting mechanism 3, the crankshaft 2a of the engine 2 is coupled to the planetary carrier 3d. In addition, the rotor (rotor element) of the first motor generator MG1 is coupled to the sun gear 3a and the above-mentioned reduction mechanism 7 is coupled to the ring gear 3b through the above-mentioned ring gear shaft 3e.

Additionally, in the thus configured power splitting mechanism 3, when a countertorque produced by the first motor generator MG1 is applied to the sun gear 3a in opposition to the output torque of the engine 2 applied to the planetary carrier 3d, a torque that is larger than the torque applied by the engine 2 appears in the ring gear 3b serving as an output element. In such a case the first motor generator MG1 operates as an electric generator. When the first motor generator MG1 operates as an electric generator, the driving force of the engine 2 supplied by the planetary carrier 3d is distributed between the sun gear 3a and the ring gear 3b in accordance with the gear ratio.

On the other hand, even in the case of startup requirements for the engine 2, the first motor generator MG1 operates as an electric motor (starter motor) and the driving force of the first motor generator MG1 is supplied to the crankshaft 2a through the sun gear 3a and the planetary carrier 3d, thereby cranking the engine 2.

In addition, when the rotational speed (output shaft rotation speed) of the ring gear 3b in the power splitting mechanism 3 is constant, the rotational speed of the engine 2 can be changed in a continuous (continuously variable) manner by changing the rotational speed of the first motor generator MG1 up or down.

### - Reduction Mechanism -

As shown in FIG. 1, the above-mentioned reduction mechanism 7 is provided with an externally toothed sun gear 7a; an internally toothed ring gear 7b disposed concentrically with this sun gear 7a; multiple pinion gears 7c which, along with being meshed with the sun gear 7a, are meshed with the ring gear 7b; and a planetary carrier 7d, which holds these multiple pinion gears 7c in a freely rotatable manner. In this reduction mechanism 7, the planetary carrier 7d is fixedly secured to the transmission case while the sun gear 7a is coupled to the rotor (rotor element) of the second motor generator MG2 and the ring gear 7b is coupled to the above-mentioned ring gear shaft 3e, respectively.

### - Power Switch -

A power switch 51 (see FIG. 2) is provided in the hybrid vehicle 1 for switching between starting and stopping the hybrid system. The power switch 51 is, for example, a rebound push-switch that is switched ON and OFF in an alternating manner whenever actuated by applying pressure. As used herein, the term "hybrid system" refers to a system that uses an engine 2 and motor generators MG1 and MG2 as travel power sources and controls the travel of the hybrid vehicle 1 by exercising various types of control, including operating control of the engine 2, drive control of the motor generators MG1 and MG2, coordinated control of the engine 2 and the motor generators MG1 and MG2, and the like.

If the power switch 51 is actuated by an occupant, including a driver, a signal (an IG-On command signal or an IG-Off command signal) that corresponds to its actuation is outputted to the hybrid ECU 10. The hybrid ECU 10 activates or shuts down the hybrid system based on the signals etc. outputted from the power switch 51.

Specifically, if the power switch 51 is actuated while the hybrid vehicle 1 is parked, the hybrid ECU 10 activates the above-described hybrid system in Position P. This puts the vehicle in a travel-enabled state. It should be noted that when a hybrid system in a parked state is started, the hybrid system is started in position P and, therefore, no driving force is outputted even if the accelerator is stepped on. The term "vehicle travel-enabled state" refers to a state (Ready-ON state), in which vehicle travel can be controlled using command signals from the hybrid ECU 10 and the hybrid vehicle 1 can be put in motion and travel if the driver steps on the accelerator. It should be noted that the ready-ON state also includes a state (EV travel-enabled state), in which the engine 2 is in a shutdown state and the hybrid vehicle 1 can be put in motion and travel with the help of the second motor generator MG2.

In addition, the hybrid ECU 10 shuts down the hybrid system if, for example, the power switch 51 is actuated (e.g., by being briefly pushed) during the startup of the hybrid system while parked in position P.

### - Shift Actuator and Shifting Mode -

The hybrid vehicle 1 of the present embodiment is provided with a shift actuator 9 such as the one illustrated in FIG. 2. This shift actuator 9 is disposed in the vicinity of the driver's seat and is provided with a shift lever 91 that is operable for displacement. In addition, a shift gate 9a, which has a parking position (Position P), a reverse position (Position R), a neutral position (Position N), a drive position (Position D), and a sequential position (Position S), is formed in the shift actuator 9 such that the driver can move the shift lever 91 to any desired position. All these positions, i.e. Position P, Position R, Position N, Position D, and Position S (including the Position "+" and Position "-" mentioned below) are detected by a shift position sensor 50.

When the above-described shift lever 91 is actuated to "Position D", the hybrid system is put into an "automatic shifting mode" and electric continuously variable transmission control is exercised, whereby the transmission ratio is controlled such that the work points of the engine 2 are located on an optimum fuel economy operation curve discussed below.

On the other hand, when the above-mentioned shift lever 91 is actuated to "Position S", the hybrid system is put into a "manual shifting mode (sequential shifting mode (S mode)). Position "+" and a Position "-" are provided before and after this Position S. Position "+" is a position, to which the shift lever 91 is actuated during a manual upshift, and Position "-" is a position, to which the shift lever 91 is actuated during a manual downshift. Also, when the shift lever 91 is in Position S and the shift lever 91 is actuated (via manual transmission actuation) to Position "+" or Position "-", with Position S as a neutral position, a pseudo gear step (e.g., a gear step formed by adjusting the engine rotation speed by controlling the first motor generator MG1) formed by the hybrid system is incremented or decremented. Specifically, with each actuation to Position "+", the gear step is incremented one step up (for example, 1st→2nd→3rd→4th→5th→6th). On the other hand, with each actuation to Position "-", the gear step is decremented one step down (for example, 6th→5th→4th→3rd→2nd→1st). It should be noted that in this manual shifting mode the number of selectable steps is not limited to "6 steps" and it may have a different number of steps (for example, "4 steps" or "8 steps").

It should be noted that the concept of the manual shifting mode in the present invention is not limited to situations, in which the shift lever 91 is in the sequential position (Position S) as above described, and includes situations, in which "2 (2nd)" or "3 (3rd)" etc. are provided as range positions and the shift lever is actuated to these range positions "2 (2nd)" or "3 (3rd)". For example, when the shift lever it actuated to range position "3 (3rd)" from the drive position, a transition takes place from the automatic shifting mode to the manual shifting mode.

In addition, paddle switches 9c, 9d are provided on the steering wheel 9b (see FIG. 2), which is located in front of the driver's seat. These paddle switches 9c, 9d are given a lever-like shape and include an upshift paddle switch 9c used for outputting a command signal requesting an upshift during the manual shifting mode and a downshift paddle switch 9d used for outputting a command signal requesting a downshift. The above-mentioned upshift paddle switch 9c is assigned the symbol "+" and the above-mentioned downshift paddle switch 9d is assigned the symbol "-", respectively. Also, if the above-mentioned shift lever 91 has been actuated to Position S and the mode has been switched to the "manual shifting mode", actuating the upshift paddle switch 9c (by pulling the switch forward) causes the gear step to be incremented one step up with each actuation. On the other hand, when the downshift paddle switch 9d is actuated (by pulling the switch forward), the gear step is decremented one step down with each actuation.

Thus, in the hybrid system of the present embodiment, when the shift lever 91 is actuated to "Position D" and the mode is switched to the "automatic shifting mode", drive control is performed such that the engine 2 is operated in an efficient manner. Specifically, the hybrid system is controlled such that the operating work points of the engine 2 are located on the optimum fuel economy curve. On the other hand, when the shift lever 91 is actuated to "Position S" and the mode is switched to the "manual shifting mode (S mode)", it becomes possible to change the transmission ratio, i.e. the ratio of the rotational speed of the engine 2 to the rotational speed of the ring gear shaft 3e, based on the gear shift actuation by the driver, for example, in 6 stages (1st through 6th). It should be noted that the first gear step (1st) is the gear step having the largest transmission ratio and the sixth gear step (6th) is the gear step having the smallest transmission ratio.

### - Motor Generators and Motor ECU -

Each one of the motor generators MG1, MG2, which are configured as well-known synchronous generator-motors that can be driven as electric generators as well as electric motors, exchanges electrical power with a battery (electrical storage device) 24 via inverters 21, 22 and a boost converter 23. Power lines 25, which interconnect the inverters 21, 22, boost converter 23, and battery 24, are configured as an anode bus and a cathode bus that are shared by the inverters 21, 22 and are designed to permit consumption of electrical power generated by either of the motor generators MG1, MG2 in the other motor. Accordingly, the battery 24 is charged and discharged by the electrical power produced by either of the motor generators MG1, MG2 or as a result of insufficient electrical power. It should be noted that when the motor generators MG1, MG2 provide a balanced electrical power budget, the battery 24 does not undergo charging and discharging.

Each of the motor generators MG1, MG2 is subject to drive control by the motor electronic control unit (hereinafter referred to as "motor ECU") 13. Signals required for drive control over the motor generators MG1, MG2, for example, signals from an MG1 rotational speed sensor (resolver) 26 and an MG2 rotational speed sensor 27, which are used to detect the rotational positions of the rotors (rotary shafts) of the motor generators MG1, MG2, and phase currents, etc. applied to the motor generators MG1, MG2, which are detected by electric current sensors, are inputted to the motor ECU 13 and switching control signals are outputted from the motor ECU 13 to the inverters 21, 22. For example, either one of the motor generators MG1, MG2 is controlled and driven as an electric generator (for example, the second motor generator MG2 is under regenerative control) or controlled and driven as an electric motor (for example, the second motor generator MG2 is under power running control). In addition, the motor ECU 13 communicates with the hybrid ECU 10 and, along with providing drive control over the motor generators MG1, MG2 based on the control signals from this hybrid ECU 10 as above described, outputs data regarding the operating state of the motor generators MG1, MG2 to the hybrid ECU 10 as the occasion demands.

### - Battery and Battery ECU -

The battery 24 is managed by a battery electronic control unit (hereinafter referred to as "battery ECU") 14. Signals required for managing the battery 24, for example, an inter-terminal voltage obtained from a voltage sensor 24a installed between the terminals of the battery 24, a charge-discharge current obtained from an electric current sensor 24b attached to the power line 25 connected to the output terminal of the battery 24, and a battery temperature Tb obtained from a battery temperature sensor 24c attached to the battery 24, and the like, are inputted to this battery ECU 14 and data regarding the state of the battery 24 is outputted as needed to the hybrid ECU 10 by communicating therewith.

In addition, in order to manage the battery 24, the battery ECU 14 computes the state of charge SOC based on an integrated value of the charge-discharge current detected by the electric current sensor 24b and, in addition, uses the computed state of charge SOC and the temperature of the battery Tb detected by the battery temperature sensor 24c to compute the input limit Wᵢₙ and output limit Wₒᵤₜ, which represent the maximum permissible power that can be used for charging and discharging the battery 24. It should be noted that the input limit Wᵢₙ and output limit Wₒᵤₜ of the battery 24 can be set by setting the basic values of the input limit Wᵢₙ and output limit Wₒᵤₜ based on the battery temperature Tb, setting the input limit correction coefficient and output limit correction coefficient based on the state of charge SOC of the battery 24, and multiplying the above-mentioned preset basic values of the input limit Wᵢₙ and output limit Wₒᵤₜ by the above-mentioned correction coefficients.

### - Hybrid ECU and Control System -

As shown in FIG. 2, the above-mentioned hybrid ECU 10 is provided with a CPU (Central Processing Unit) 40, a ROM (Read Only Memory) 41, a RAM (Random Access Memory) 42, and a backup RAM 43, etc. The ROM 41 stores various control programs and maps, etc. used for reference when running the various control programs. The CPU 40 conducts various types of computational processing based on the various control programs and maps stored in the ROM 41. The RAM 42 is a memory used for temporarily storing the computational results of the CPU 40 and data etc. supplied by the sensors. The backup RAM 43 is a non-volatile memory, which stores, for example, the data and the like that should be saved when an IG-Off is issued.

Along with being mutually interconnected through a bus 46, the above-described CPU 40, ROM 41, RAM 42 and backup RAM 43 are connected to an input interface 44 and an output interface 45.

The input interface 44 has connected thereto the above-mentioned shift position sensor 50; the above-mentioned power switch 51; an accelerator opening sensor 52, which outputs a signal corresponding to the amount of depression of the accelerator pedal; a brake pedal sensor 53, which outputs a signal corresponding to the amount of depression of the brake pedal; and a vehicle speed sensor 54, which outputs a signal corresponding to the vehicle body speed, and the like.

As a result, a shift position signal from the shift position sensor 50, an IG-On signal and an IG-Off signal from the power switch 51, an accelerator opening signal from the accelerator opening sensor 52, a brake pedal position signal from the brake pedal sensor 53, and a vehicle speed signal from the vehicle speed sensor 54, and the like, are inputted to the hybrid ECU 10.

In addition, the above-mentioned engine ECU 11, motor ECU 13, battery ECU 14, and a GSI (Gear Shift Indicator)-ECU 16, which is discussed below, are connected to the input interface 44 and output interface 45, and the hybrid ECU 10 transmits and receives various control signals and data to and from the engine ECU 11, motor ECU 13, battery ECU 14, and GSI-ECU 16.

### - Driving Force Flow in Hybrid System -

In the thus configured hybrid vehicle 1, the torque (required torque) to be outputted to the driving wheels 6a, 6b is calculated based on the vehicle speed V and the extent of accelerator opening Acc, which corresponds to the amount of depression of the accelerator pedal by the driver, and operating control over the engine 2 and the motor generators MG1, MG2 is exercised in such a manner that travel is accomplished on the basis of a required driving force corresponding to this required torque. Specifically, in order to achieve a reduction in fuel consumption in the operating range, in which the required driving force is relatively low, the above-mentioned required driving force is obtained using the second motor generator MG2. On the other hand, in the operating range, in which the required driving force is relatively high, the engine 2 is driven together with the second motor generator MG2 and the above-mentioned required driving force is obtained using the driving force of these drive sources (travel power sources).

More specifically, if the operational efficiency of the engine 2 is low when the vehicle is set in motion or travels at a low speed, only the second motor generator MG2 is used for travel (hereinafter referred to as "EV travel"). In addition, EV travel also takes place when the driver selects the EV travel mode using a travel mode selector switch located in the interior of the vehicle cabin.

On the other hand, during regular travel (hereinafter referred to as "HV travel"), the driving force of the engine 2 is split, for example, between 2 paths by the above-mentioned power splitting mechanism 3 (torque split), with one portion of the driving force used for driving the driving wheels 6a, 6b directly (direct torque driving) and the other portion of the driving force used to generate electricity by driving the first motor generator MG1. At such time, drive assistance (via electric path driving) is provided to the driving wheels 6a, 6b by driving the second motor generator MG2 using the electrical power generated by driving the first motor generator MG1.

Thus, the above-mentioned power splitting mechanism 3 operates as a differential mechanism, with most of the power from the engine 2 mechanically transmitted to the driving wheels 6a, 6b via its differential action and the remainder of the power from the engine 2 electrically transmitted along the electric path from the first motor generator MG1 to the second motor generator MG2, thereby implementing an electric continuously variable transmission, in which the transmission ratio is changed by electrical means. As a result, without depending on the torque or rotational speed of the driving wheels 6a, 6b (ring gear shaft 3e), the rotational speed of the engine and engine torque can be freely manipulated, and an operating state of the engine 2 can be obtained, in which specific fuel consumption is optimized while at the same time obtaining the driving force required by the driving wheels 6a, 6b.

In addition, when the vehicle travels at a high speed, electrical power from the battery 24 is supplied to the second motor generator MG2 so as to enhance the output of this second motor generator MG2 and thereby supply additional driving force to the driving wheels 6a, 6b (drive assist; power running).

Furthermore, during deceleration, the second motor generator MG2 performs regenerative power generation by operating as an electric generator and stores the recovered electrical power in the battery 24. It should be noted that if the amount of charge in the battery 24 declines and charging becomes particularly desirable, the output of the engine 2 is increased so as to increase the amount of electricity generated by the first motor generator MG1, thereby increasing the amount of charge destined for the battery 24. In addition, when the vehicle travels at a low speed, control may be exercised to increase the amount of drive provided by the engine 2 as the occasion demands. Examples include situations, in which the battery 24 needs charging as described above, auxiliary equipment such as air conditioning is driven, or the temperature of the coolant in the engine 2 is increased to a specified temperature, and the like.

In addition, in the hybrid vehicle 1 of the present embodiment, the engine 2 is shut down in order to improve fuel economy depending on the operating state of the vehicle and the state of the battery 24. Subsequently, the operating state of the hybrid vehicle 1 and the state of the battery 24 are detected and the engine 2 is restarted. Thus, in the hybrid vehicle 1, the engine 2 is operated intermittently (by intermittently repeating engine shutdown and engine restart) even though the power switch 51 may be in the ON position.

### - Basic Control in Manual Shifting Mode -

Basic control of the hybrid system in the above-described "manual shifting mode" will be described below.

FIG. 3 is a flowchart that illustrates a basic control procedure used in the manual shifting mode carried out by the hybrid ECU 10 when the driver actuates the shift lever 91 to Position S and steps on the accelerator. This flowchart is repeatedly executed at predetermined intervals (for example, several msec).

First of all, Step ST1 involves input processing of data required for control, such as the gear step, which is recognized based on the output signal of the shift position sensor 50 (the gear step selected in the manual shifting mode; it may be referred to as "shift position SP" below); the degree of accelerator opening Acc, which is obtained from the output signal of the accelerator opening sensor 52; vehicle speed V, which is obtained from the output signal of the vehicle speed sensor 54; the rotational speeds Nm1, Nm2 of the motor generators MG1, MG2, which are obtained from the output signals of the MG1 rotational speed sensor 26 and MG2 rotational speed sensor 27; charge-discharge required powers Pb; and input limit Wᵢₙ and output limit Wₒᵤₜ, which represent the electrical power that can be used for charging and discharging the battery 24.

Information on the above-mentioned rotational speeds Nm1, Nm2 of the motor generators MG1, MG2 is supplied from the motor ECU 13 to the hybrid ECU 10. In addition, values configured by the battery ECU 14 based on the state of charge SOC of the battery 24 and the like as the electric power to be used for charging or discharging the battery 24 are supplied from this battery ECU 14 to the hybrid ECU 10 as the charge-discharge required powers Pb. Furthermore, the input limit Win, which is used as the permissible charging power, i.e. the electrical power that can be used for charging the battery 24, and the output limit Wout, which is used as the permissible discharge power, i.e. the electrical power that can be discharged therefrom, are configured based on the battery temperature Tb detected by the battery temperature sensor 24c and the state of charge SOC of the battery 24 and are supplied from this battery ECU 14 to the hybrid ECU 10.

After the data input process of Step ST1, the program advances to Step ST2 wherein, after configuring the required torque Tr to be outputted to the ring gear shaft 3e based on the input shift position SP, the extent of accelerator opening Acc, and the vehicle speed V, it sets the required power Pe required for the engine 2.

In the present embodiment, a required torque configuration map representing a predefined relationship between the shift position SP, accelerator opening Acc, vehicle speed V, and required torque Tr is stored in the ROM 41. A required torque Tr that corresponds to shift position SP, accelerator opening Acc, and vehicle speed V is extracted by referring to this required torque configuration map.

An exemplary required torque configuration map is illustrated in FIG. 4. The required torque configuration map of FIG. 4, which is a map used to obtain a driver's required torque using vehicle speed V and accelerator opening Acc as parameters, shows a number of characteristic curves for different values of accelerator opening Acc. Among these characteristic curves, the characteristic curve shown in the uppermost portion corresponds to full accelerator opening (Acc=100%). In addition, the characteristic curve that corresponds to complete closure of accelerator opening Acc is shown as "Acc=0%". These characteristic curves have the property that the driver's required torque used for generating braking power becomes relatively higher as vehicle speed V becomes higher.

In addition, the above-mentioned required power Pe is calculated as a sum of a product (Tr×Nr) obtained by multiplying the required torque Tr obtained from the required torque configuration map of FIG. 4 by the rotational speed Nr of the ring gear shaft 3e, charge-discharge required power Pb (with the discharge requirement side positive), and loss Loss.

Next, moving on to Step ST3, a provisional target rotational speed Neₜₘₚ and a provisional target torque Teₜₘₚ, which constitute provisional target operating work points (operating points) of the engine 2, are set based on the required power Pe set in Step ST2. In the present embodiment, the provisional target torque Teₜₘₚ and the provisional target rotational speed Neₜₘₚ of the engine 2 are assumed to be set based on an operating curve used for efficiently operating the engine 2 that is predefined as a configuration constraint for operating work points used during regular travel (HV travel) (referred to as the "optimum fuel economy operating curve" below) and the required power Pe.

FIG. 5 illustrates the optimum fuel economy operating curve of the engine 2 and a correlation curve (required power curve) of rotational speed Ne and torque Te. This as shown in FIG. 5, provisional target rotational speed Neₜₘₚ and provisional target torque Teₜₘₚ can be obtained at the intersection (point X in the diagram) of the above-mentioned optimum fuel economy operating curve and the correlation curve (required power curve) indicating that the required power Pe (Ne×Te) becomes constant.

After setting the provisional target torque Teₜₘₚ and provisional target rotational speed Neₜₘₚ of the engine 2 in this manner, the program advances to Step ST4 and configures the lower limit Neₘᵢₙ of the engine rotation speed, i.e. the lower limit value of the rotational speed Ne of the engine 2, based on the above-mentioned input shift position SP and vehicle speed V.

In the hybrid vehicle 1 according to the present embodiment, when the sequential position is selected as the shift position SP, the lower limit Neₘᵢₙ of the engine rotation speed is preset in accordance with the vehicle speed V and shift position SP (1st to 6th).

FIG. 6 is an engine rotation speed lower limit configuration map reflecting a predetermined relationship between the shift position SP, vehicle speed V (or rotational speed of ring gear shaft 3e) and the lower limit Neₘᵢₙ of the engine rotation speed. This engine rotation speed lower limit configuration map is stored in the ROM 41 of the hybrid ECU 10 and a value corresponding to a given vehicle speed V and shift position SP is extracted and configured as the lower limit Neₘᵢₙ of the engine rotation speed.

Namely, the various operating point configuration constraints (target rotational speed configuration constraints) of the engine 2 are associated with the shift positions 1st to 6th. Specifically, the lower limit Neₘᵢₙ of the engine rotation speed is set to a value that decreases as the number of shift positions SP increases (from the 1st to the 6th) at the same vehicle speed V. This is due to the fact that the friction of the engine 2 is used if the extent of accelerator opening Acc is small or when the accelerator is OFF, and the lower the gear step (the larger the transmission ratio) when the corresponding resistance operates as an engine brake (braking power applied to the driving wheels 6a, 6b), the better the decline in engine rotation speed is limited, thereby allowing for sufficient braking power to be generated and simulating an engine brake similar to a vehicle provided with a manual gearbox (manual transmission). Due to the fact that the lower limit Nemin of the engine rotation speed has been set, as shown in FIG. 7, the magnitude of the engine-braking torque (torque acting on the wheels 6a, 6b as a braking force) varies depending on the gear step and vehicle speed, and, even at the same vehicle speed (the same vehicle speed equal to or higher than a predetermined vehicle speed), the lower the step (the higher the transmission ratio), the larger engine braking torque that is obtained.

After setting the lower limit Neₘᵢₙ of the engine rotation speed in this manner, the program advances to Step ST5 wherein, along with setting the higher value among the provisional target rotational speed Neₜₘₚ and the lower limit Neₘᵢₙ of the engine rotation speed as the target rotational speed Ne of the engine 2, the program sets the target torque Te of the engine 2 by dividing the required power Pe set in Step ST2 by the target rotational speed Ne.

Subsequently, the program advances to Step ST6 and calculates the target rotational speed Nm1 of the first motor generator MG1 using the above-mentioned set target rotational speed Ne, the rotational speed Nr of the ring gear shaft 3e, and the gear ratio ρ of the power splitting mechanism 3 (the number of teeth of the sun gear 3a/the number of teeth of the ring gear 3b), after which it sets the command torque Tm1 of the first motor generator MG1 based on the calculated target rotational speed Nm1 and current rotational speed Nm1.

After setting the command torque Tm1 of the first motor generator MG1 in this manner, the program advances to Step ST7, wherein the program calculates torque limits Tₘᵢₙ, Tₘₐₓ as the upper and lower limits of the torque that may be outputted from the second motor generator MG2 by dividing the difference between the I/O limits Wᵢₙ, Wₒᵤₜ of the battery 24 and the power consumption (generated power) of the first motor generator MG1, which is obtained as a product of the command torque Tm1 and the present rotational speed Nm1 of the first motor generator MG1, by the rotational speed Nm2 of the second motor generator MG2.

Next, in Step ST8, based on the above-mentioned required torque Tr, command torque Tm1, gear ratio ρ of the power splitting mechanism 3, and gear ratio Gr of the reduction mechanism 7, the program calculates a provisional motor torque Tm2ₜₘₚ as a torque to be outputted from the second motor generator MG2, and, in Step ST9, sets the command torque Tm2 of the second motor generator MG2 as a value, in which the provisional motor torque Tm2ₜₘₚ is limited by the torque limits Tₘᵢₙ, Tₘₐₓ calculated in the above-described Step ST7. Setting the command torque Tm2 of the second motor generator MG2 in this manner makes it possible to configure the torque outputted to the ring gear shaft 3e as a torque limited to the range between the output limit Wₒᵤₜ and the input limit Wᵢₙ of the battery 24.

After setting the target torque Te and the target rotational speed Ne of the engine 2 and the command torques Tm1, Tm2 of the motor generators MG1, MG2 in this manner, the program advances to Step ST10, in which the program transmits the target rotational speed Ne and target torque Te of the engine 2 to the engine ECU 11 and the command torques Tm1, Tm2 of the motor generators MG1, MG2 to the motor ECU 13. respectively, thereby controlling the engine 2 and the motor generators MG1, MG2. In other words, the engine ECU 11, which receives the target rotational speed Ne and the target torque Te, effects engine control (fuel injection control, ignition control, intake air volume adjustment control, etc.) required to obtain the target rotational speed Ne and the target torque Te. In addition, the motor ECU 13, which receives the command torques Tm1, Tm2, exercises switching control over the switching elements of the inverters 21, 22 such that the first motor generator MG1 is driven using the command torque Tm1 and the second motor generator MG2 is driven using the command torque Tm2.

If Position S is selected in the hybrid vehicle 1 as the shift position SP (if the manual shifting mode is selected), then, as a result of repeating the above-mentioned operation, after setting the required torque Tr and the target operating work points of the engine 2 (target rotational speed Ne and target torque Te) based on the shift position SP (1st to 6th), the engine 2 and the motor generators MG1, MG2 are controlled such that a torque based on the required torque Tr is outputted to the ring gear shaft 3e, which makes it possible to match the driver's acceleration and deceleration requirements in a highly responsive manner.

### - Gear Shift Indicator -

In the hybrid vehicle 1 according to the present embodiment, there is installed a gear shift indicator that issues gear shifting instructions (gear shifting directions) prompting the driver to shift gears in the manual shifting mode (S mode). This gear shift indicator is described below.

As shown in FIG. 8, a combination meter 6, which is located in front of the driver's seat in the cabin of the vehicle, includes a speedometer 61, a tachometer 62, a water temperature gauge 63, a fuel gauge 64, an odometer 65, a trip meter 66, and various warning indicator lamps, etc.

In addition, in this combination meter 6, there is provided a gear shift indicator that indicates gear step (gear position) selections appropriate in terms of improving fuel economy depending on the travel state of the hybrid vehicle 1. This gear shift indicator is described below.

An upshift lamp 67, which is illuminated when indicating to shift the gear step up, and a downshift lamp 68, which is illuminated when indicating to shift the gear step down, are provided in the combination meter 6 as display units used for gear shifting instructions. The upshift lamp 67 and downshift lamp 68 are constituted, e.g. by LEDs and the like, and are lit and extinguished under the control of the GSI-ECU 16 (see FIG. 1). The upshift lamp 67, downshift lamp 68, and GSI-ECU 16 form the "gear shift indicator" of the present invention. It should be noted that it is possible to use a configuration, in which the GSI-ECU 16 is not provided and the above-mentioned engine ECU 11, or a power management ECU, not shown, controls the lighting and extinguishing of the upshift lamp 67 and downshift lamp 68.

### - Shifting Instruction Control in S-mode -

First of all, it should be noted that although hybrid vehicles permit EV travel, in the S-mode, as well as when engine shutdown is allowed (when intermittent operation is allowed), the engine is sometimes brought into an operational state in response to conditions determined by a manually selected gear step (transmission ratio) (for example, when the gear step selected in the manual shifting mode is a gear step that prohibits intermittent engine operation (engine shutdown)). In such a situation, fuel economy may deteriorate because the engine is operated.

In view of the point made above, the present embodiment is characterized by the fact that when the engine 2 is operational in the S-mode, the driver is prompted to change to a gear step that permits the engine 2 to be shut down (permits intermittent engine operation), in other words, a gear step that permits EV travel, thereby achieving an improvement in fuel economy. An example of specific control (shifting instruction control in the S-mode) will now be described by referring to the flowchart of FIG. 10.

The control routine of FIG. 10 is repeatedly executed by the hybrid ECU 10 at predetermined intervals (for example, several msec).

A description of the gear step that allows for the engine 2 to be shut down (engine shutdown-permitting gear step) will be provided before describing the S-mode shifting instruction control of FIG. 10.

In the present embodiment, the sixth gear step (6th) among the gear steps selectable in the S-mode (first gear step through sixth gear step) is used as a gear step allowing the engine 2 to be shut down (intermittent engine operation-permitting gear step) and gear steps from the first gear step (1st) to the fifth gear step (5th) are used as gear steps, in which the shutdown of the engine 2 is not permitted (intermittent engine operation-prohibiting gear steps). It should be noted that the intermittent engine operation-permitting gear step (6th) is stored in the ROM 41 of the hybrid ECU 10.

In addition, when the control routine of FIG. 10 (including the subroutine of FIG. 11) is executed, the hybrid ECU 10 is aware of the current gear step of the power transmission system (current gear step). For example, the unit calculates the ratio (transmission ratio) between the rotational speed (engine rotation speed) of the input shaft (planetary carrier 3d) of the power splitting mechanism 3 and the rotational speed (known from the vehicle speed sensor 54 or an output signal indicating the output shaft rotation speed) of the ring gear shaft 3e and learns the current gear step from the calculated transmission ratio. It should be noted that the current gear step can also be learned based on the output signal of the shift position sensor 50 in accordance with the gear step set when the shift lever 91 is actuated to Position S and the number of times the lever has been actuated to the "+" position or "-" position in Position S.

The control routine of FIG. 10 is described next.

When the control routine of FIG. 10 is initiated, first of all, in Step ST101, the output signal of the shift position sensor 50 is used to decide whether the S-mode (manual shifting mode) has been selected. If the result of the decision is negative (NO), the routine goes to "Return". If the result of the decision in Step ST101 is positive (YES), the routine advances to Step ST102.

In Step ST102, it is decided whether or not the engine 2 is in the operating state. The "operating state of the engine" may be determined, for example, by the output signal of the crankshaft position sensor 56. In addition, the "operating state of the engine" may be determined based on command signals and the like transmitted from the hybrid ECU 10 to the engine ECU 11.

If the result of the decision in the above-mentioned Step ST102 is negative (NO), in other words, if the mode of travel is EV travel with the engine 2 shut down, shifting instructions from the above-mentioned gear shift indicator are prohibited and no gear shifting directions (gear shifting instructions) are issued (Step ST104).

On the other hand, if the result of the decision in Step ST102 is positive (YES), in other words, if the engine 2 is operational in the S-mode, a shifting instruction control subroutine is carried out in Step ST103. This subroutine will be described with reference to FIG. 11.

When the subroutine of FIG. 11 is initiated, first of all, in Step ST131, it is decided whether automatic engine shutdown conditions have been met. If the result of the decision is positive (YES) (the automatic engine shutdown conditions have been met), the routine advances to Step ST132. If the result of the decision in Step ST131 is negative (NO) (the automatic engine shutdown conditions have not been met), the routine advances to Step ST136.

Here, with regard to the automatic engine shutdown conditions used for the determination made in Step ST131, the absence of battery requirements, air-conditioning requirements, driving force requirements, and other engine operating requirements means that the "automatic engine shutdown conditions have been met" and when there are engine operating requirements, it means that "the automatic engine shutdown conditions have not been met".

In Step ST132, it is decided whether or not the current gear step of the power transmission system is lower than the engine shutdown-permitting gear step (sixth gear step) (current gear step < engine shutdown-permitting gear step). If the result of the decision is positive (YES), the routine advances to Step ST133.

In Step ST133, a control signal used for carrying out an upshift command is transmitted from the hybrid ECU 10 to the GSI-ECU 16, thereby illuminating the upshift lamp 67 (see FIG. 9(a)) (issuing an upshifting instruction). This operation corresponds to "prompting the driver to change to a gear step that allows for the engine to be shut down", described herein.

The illumination of this upshift lamp 67 (upshifting instruction) continues until the result of the decision in Step ST132 becomes negative (NO) ([the current gear step = engine shutdown-permitting gear step]). When the driver actuates the shift lever 91 to the "+" position or actuates the upshift paddle switch 9c in response to such an upshifting instruction (gear shifting directions) provided by the illumination of the upshift lamp 67, an upshifting operation is carried out in the hybrid system. At the point in time when the current gear step coincides with the engine shutdown-permitting gear step (the sixth gear step) (when the result of the decision in Step ST132 becomes negative (NO)) as a result of this upshifting operation, the upshift lamp 67 is extinguished and the shifting instruction of the above-mentioned gear shift indicator is no longer subject to execution (Step ST134).

To describe the processing performed in Step ST132 to Step ST133 above more specifically, when the current manually set gear step is, for example, the fourth gear step (4th), the current gear step is lower than the engine shutdown-permitting gear step (the sixth gear step), and, therefore, the upshift lamp 67 is illuminated to issue an upshifting instruction. When the driver performs an upshifting operation once in response to this upshifting instruction, the current gear step changes to the fifth gear step (5th). Since one such upshifting operation is insufficient to bring the current gear step to the engine shutdown-permitting gear step (the sixth gear step), the upshifting instruction provided by the illumination of the upshift lamp 67 continues to be in effect. Subsequently, when the driver performs another upshifting operation, the current gear step coincides with the engine shutdown-permitting gear step (the sixth gear step).

As a result of such upshifting operations (e.g., 4th→5th→6th), when the current gear step reaches the engine shutdown-permitting gear step (the sixth gear step), the shifting instruction provided by the above-mentioned gear shift indicator is no longer subject to execution (Step ST134). Furthermore, in Step ST135 the engine 2 is shut down and the travel state of the hybrid vehicle 1 changes to EV travel. Subsequently, the processing of this subroutine ends and the program returns to the main routine of FIG. 10.

On the other hand, if the result of the decision in the above-mentioned Step ST131 is negative (NO), in other words, if the automatic engine shutdown conditions have not been met, it is prohibited to issue shifting instructions that prompt a change to the engine shutdown-permitting gear step (Step ST136). Subsequently, the processing of this subroutine ends and the program returns to the main routine of FIG. 10.

### - Effects -

As described above, according to the present embodiment, if engine shutdown is possible (EV travel is possible) in the S-mode, the driver is prompted to change to a gear step (6th) that permits engine shutdown, and, as a result, the driver manually shifts gears in response to this gear shifting instruction (gear shifting directions), thereby allowing for the travel state of the hybrid vehicle 1 to be switched to EV travel. As a result, travel with the engine 2 in an operational state can be minimized and an improvement in fuel economy can be achieved.

Furthermore, if the automatic engine shutdown conditions have been met (when the engine is shut down in a gear step allowing for the engine to be shut down), a shifting instruction is issued that prompts a change to the engine shutdown-permitting gear step, and if the engine 2 cannot be stopped because of the above-mentioned engine operating requirements, in other words, if no fuel economy effects can be obtained by prompting a change to the engine shutdown-permitting gear step, shifting instructions are prohibited, thereby making it possible to eliminate unnecessary shifting instructions unlikely to produce fuel economy effects.

It should be noted that even when the vehicle is in the gear step that allows for the engine to be shut down, if the engine 2 cannot be shut down because of the engine operating requirements, a prompt may be issued for a different type of change than the above-mentioned change to the engine shutdown-permitting gear step.

### (Variation 1-1)

Another example of S-mode shifting instruction control will be now described with reference to FIG. 12. The control routine of FIG. 12 can also be executed by the hybrid ECU 10.

This example is characterized by the fact that the decision process of Step ST120 is added between Step ST102 and Step ST103 in the flowchart of FIG. 10 of the above-described Embodiment 1.

In Step ST120, along with obtaining the current vehicle speed V from the output signal of the vehicle speed sensor 54, the current extent of accelerator opening Acc is obtained from the output signal of the accelerator opening sensor 52 and the vehicle speed V and the extent of accelerator opening Acc are used to obtain the required torque Tr by referring to the required torque configuration map shown in FIG. 4. Based on this required torque Tr and the above-mentioned vehicle speed V, it is decided whether or not the current vehicle state of the hybrid vehicle 1 has entered the region, in which engine shutdown is permissible on the map shown in FIG. 13 (the region of the 6^{th} shown by hatching). If the result of the decision is negative (NO), the routine goes to "Return". It should be noted that the map of FIG. 13, which was produced by using the vehicle speed and the required torque as parameters and obtaining the region, in which engine shutdown is permissible (the region, in which EV travel is possible) at the transmission ratio of the sixth gear step (6th), via experimentation and calculation with account taken of the characteristic plot of the second motor generator MG2, is stored in the ROM 41 of the hybrid ECU 10.

If the result of the decision in the above-mentioned Step ST120 is positive (YES) (if the vehicle state of the hybrid vehicle 1 falls within the region, in which engine shutdown is permissible), the sixth gear step (6th) is set as the engine shutdown-permitting gear step and the program then advances to Step ST103.

Processing equivalent to the subroutine of FIG. 11 is carried out in Step ST103. In other words, if the automatic engine shutdown conditions have been met, the current gear step of the power transmission system is compared with the engine shutdown-permitting gear step (sixth gear step) set in the above-described Step ST120, and if the current gear step is a gear step that is lower than the engine shutdown-permitting gear step (sixth gear step) (current gear step < engine shutdown-permitting gear step), the upshift lamp 67 is illuminated (see FIG. 9(a)) to issue an upshifting instruction. When the driver actuates the shift lever 91 to the "+" position or actuates the upshift paddle switch 9c in response to this upshifting instruction (gear shifting directions), an upshifting operation is carried out in the hybrid system. Then, when the current gear step coincides with the engine shutdown-permitting gear step (sixth gear step) as a result of this upshifting operation, the upshift lamp 67 is extinguished, such that the shifting instruction from the above-mentioned gear shift indicator is no longer subject to execution and the travel state of the hybrid vehicle 1 is changed to EV travel by shutting down the engine 2.

On the other hand, if the automatic engine shutdown conditions have not been met, processing is executed that prohibits shifting instructions prompting a change to the above-mentioned engine shutdown-permitting gear step.

### - Effects -

According to this example, if the vehicle state of the hybrid vehicle 1 enters the engine shutdown-permitted region (EV travel-enabled region) in the S-mode, the driver is prompted to change to the gear step that allows for the engine to be shut down (6th) and, as a result, the driver changes gears manually in response to the gear shifting instruction (gear shift directions), thereby making it possible to switch the travel state of the hybrid vehicle 1 to EV travel. As a result, travel with the engine 2 in an operational state can be minimized and an improvement in fuel economy can be achieved.

Furthermore, a shifting instruction that prompts a change to the engine shutdown-permitting gear step is issued only if the automatic engine shutdown conditions have been met, and if the engine 2 cannot be shut down because of the above-mentioned engine operating requirements, in other words, if no fuel economy effects can be obtained by prompting a gear change to the engine shutdown-permitting gear step, shifting instructions are prohibited, thereby making it possible to eliminate unnecessary shifting instructions unlikely to produce fuel economy effects.

### (Variation 1-2)

Another example of S-mode shifting instruction control will be now described with reference to FIG. 14. The control routine of FIG. 14 (including the subroutine of FIG. 15) can also be executed by the hybrid ECU 10.

In this example, gear steps 1 (1^{st}) through 3 (3^{rd}) among the gear steps selectable in the S-mode (first gear step through sixth gear step) are used as gear steps allowing the engine 2 to be shut down (intermittent engine operation-permitting gear steps) and gear steps 4 (4^{th}) through 6 (6^{th}) are used as gear steps, in which the shutdown of the engine 2 is not permitted (intermittent engine operation-prohibiting gear steps).

It should be noted that also when the control routine of FIG. 14 (including the subroutine of FIG. 15) is executed, the hybrid ECU 10 is aware of the current gear step of the power transmission system (current gear step).

Since the processes of Step ST201 and Step ST202 in the control routine of FIG. 14 are the same as Step ST101 and Step ST102 in the control routine of the above-mentioned FIG. 10, their detailed description is omitted.

If the result of the decision in Step ST202 is negative (NO), in other words, if the mode of travel is EV travel with the engine 2 shut down, shifting instructions from the above-mentioned gear shift indicator are prohibited and no gear shifting directions (gear shifting instructions) are issued (Step ST204).

On the other hand, if the result of the decision in Step ST202 is positive (YES), in other words, if the engine 2 is operational in the S-mode, a shifting instruction control subroutine is carried out in Step ST203. This subroutine will be described with reference to FIG. 15.

When the subroutine of FIG. 15 is initiated, first of all, in Step ST231, it is decided whether automatic engine shutdown conditions have been met. If the result of the decision is positive (YES), the routine advances to Step ST232. If the result of the decision in Step ST231 is negative (NO) (the automatic engine shutdown conditions have not been met), the routine advances to Step ST236. It should be noted that since the issue of whether the automatic engine shutdown conditions have been met or not is as described above, its description is omitted.

In Step ST232, the current gear step of the power transmission system is compared with the highest gear step (third gear step) among the above-mentioned engine shutdown-permitting gear steps (1st to 3rd) and a decision is made as to whether or not the current gear step is higher than the engine shutdown-permitting gear step (3rd) (current gear step > engine shutdown-permitting gear step). If the result of the decision is positive (YES), the routine advances to Step ST233.

In Step ST233, a control signal used for carrying out a downshift command is transmitted from the hybrid ECU 10 to the GSI-ECU 16, thereby illuminating the downshift lamp 68 (see FIG. 9(b)). The illumination of this downshift lamp 68 (downshifting instruction) is continued until the result of the decision in Step ST232 becomes negative (NO) ([the current gear step = engine shutdown-permitting gear step]). When the driver actuates the shift lever 91 to the "-" position or actuates the downshift paddle switch 9d in response to such an upshifting instruction (gear shifting directions) provided by the illumination of the downshift lamp 68, a downshifting operation is carried out in the hybrid system. At the point in time when the current gear step coincides with the engine shutdown-permitting gear step (the third gear step) (when the result of the decision in Step ST232 becomes negative (NO)) as a result of this downshifting operation, the downshift lamp 68 is extinguished and the shifting instruction of the above-mentioned gear shift indicator is no longer subject to execution (Step ST234).

To describe the processing performed in Step ST232 to Step ST233 above more specifically, when the current manually set gear step is, for example, the fifth gear step (5th), the current gear step is higher than the engine shutdown-permitting gear step (third gear step), and, therefore, a downshifting instruction is issued by illuminating the downshift lamp 68. When the driver performs a single downshifting operation once in response to this downshifting instruction, the current gear step changes to the fourth gear step (4th). Since one such downshifting operation is insufficient to bring the current gear step to the engine shutdown-permitting gear step (third gear step), the downshifting instruction provided by the illumination of the downshift lamp 68 continues to be in effect. Subsequently, when the driver performs a downshifting operation once again, the current gear step coincides with the engine shutdown-permitting gear step (third gear step).

As a result of such downshifting operations (e.g., 5th→4th→3rd), when the current gear step reaches the engine shutdown-permitting gear step (third gear step), the shifting instruction provided by the above-mentioned gear shift indicator is no longer subject to execution (Step ST234). Furthermore, in Step ST235 the engine 2 is shut down and the travel state of the hybrid vehicle 1 changes to EV travel. Subsequently, the processing of this subroutine ends and the program returns to the main routine of FIG. 14.

On the other hand, if the result of the decision in the above-mentioned Step ST231 is negative (NO), in other words, if the automatic engine shutdown conditions have not been met, it is prohibited to issue shifting instructions that prompt a change to the above-mentioned engine shutdown-permitting gear step (Step ST236). Subsequently, the processing of this subroutine ends and the program returns to the main routine of FIG. 14.

### - Effects -

As described above, according to this example, if engine shutdown is possible (EV travel is possible) in the S-mode, the driver is prompted to change to a gear step (3rd) that permits engine shutdown, as a result of which the driver manually shifts gears in response to this gear shifting instruction (gear shifting directions), thereby allowing for the travel state of the hybrid vehicle 1 to be switched to EV travel. As a result, travel with the engine 2 in an operational state can be minimized and an improvement in fuel economy can be achieved.

Furthermore, a shifting instruction that prompts a change to the engine shutdown-permitting gear step is issued only if the automatic engine shutdown conditions have been met, and if the engine 2 cannot be shut down because of the above-mentioned engine operating requirements, in other words, if no fuel economy effects can be obtained by prompting a gear change to the engine shutdown-permitting gear step, shifting instructions are prohibited, thereby making it possible to eliminate unnecessary shifting instructions unlikely to produce fuel economy effects.

### (Variation 1-3)

Another example of S-mode shifting instruction control will be now described with reference to FIG. 16. The control routine of FIG. 16 can also be executed by the hybrid ECU 10.

This example is characterized by the fact that the decision process of Step ST220 is added between Step ST202 and Step ST203 in the flowchart of FIG. 14 of the above-described Variation 1-2.

In Step ST220, along with obtaining the current vehicle speed V from the output signal of the vehicle speed sensor 54, the current extent of accelerator opening Acc is obtained from the output signal of the accelerator opening sensor 52, and the vehicle speed V and the extent of accelerator opening Acc are used to obtain the required torque Tr by referring to the required torque configuration map shown in FIG. 4. Based on this required torque Tr and the above-mentioned vehicle speed V, it is decided whether or not the current vehicle state of the hybrid vehicle 1 has entered the region, in which engine shutdown is permissible on the map shown in FIG. 17 (the 3th region shown by hatching). If the result of the decision is negative (NO), the routine goes to "Return". It should be noted that the map of FIG. 17, which was produced by using the vehicle speed and the required torque as parameters and obtaining the region, in which engine shutdown is permissible (the region, in which EV travel is possible) at the transmission ratio of the third gear step (3rd), via experimentation and calculation with account taken of the characteristic plot of the second motor generator MG2, is stored in the ROM 41 of the hybrid ECU 10.

If the result of the decision in the above-mentioned Step ST220 is positive (YES) (if the vehicle state of the hybrid vehicle 1 falls within the region, in which engine shutdown is permissible), the third gear step (3rd) is set as the engine shutdown-permitting gear step and the program then advances to Step ST203.

Processing equivalent to the subroutine of FIG. 15 is carried out in Step ST203. In other words, if the automatic engine shutdown conditions have been met, the current gear step of the power transmission system is compared with the engine shutdown-permitting gear step (3rd) set in the above-described Step ST220, and if the current gear step is a gear step that is higher than the engine shutdown-permitting gear step (third gear step) (current gear step > engine shutdown-permitting gear step), the downshift lamp 68 is illuminated (see FIG. 9(b)) to issue a downshifting instruction. When the driver actuates the shift lever 91 to the "-" position or actuates the downshift paddle switch 9d in response to this downshifting instruction (gear shifting directions), a downshifting operation is carried out in the hybrid system. Then, when the current gear step coincides with the engine shutdown-permitting gear step (third gear step) as a result of this downshifting operation, the downshift lamp 68 is extinguished, such that the shifting instruction from the above-mentioned gear shift indicator is no longer subject to execution and the travel state of the hybrid vehicle 1 is changed to EV travel by shutting down the engine 2.

On the other hand, if the automatic engine shutdown conditions have not been met, processing is executed that prohibits shifting instructions prompting a change to the above-mentioned engine shutdown-permitting gear step.

Here, in this example, during EV travel in the third gear step (3rd), i.e. the engine shutdown-permitting gear step, a decision is made as to whether or not the vehicle state of the hybrid vehicle 1 entered the region, in which it is permissible to shut down the engine, in the second gear step (2nd) (decision process of Step ST220). Specifically, a map (2^{nd} gear map) of the type illustrated in the above-described in FIG. 17 is used to decide whether or not the state has entered the region, in which engine shutdown is permissible, and if the result of the decision is positive (YES), the second gear step (2nd) is set as the engine shutdown-permitting gear step and the subroutine of FIG. 16 is executed. Furthermore, if it entered the region, in which engine shutdown is permissible, in the first gear step (1st) (which is determined using a map of the type illustrated in FIG. 17 (1^{st} gear map)), the first gear step (1st) may be set as the engine shutdown-permitting gear step and the subroutine of FIG. 16 may be executed. Doing so makes it possible to minimize the output torque of the second motor generator MG2.

### - Effects -

As described above, according to this example, if engine shutdown is possible (EV travel is possible) in the S-mode, the driver is prompted to change to a gear step (3^{rd}, 2^{nd}, or 1^{st}) that permits engine shutdown, as a result of which the driver manually shifts gears in response to this gear shifting instruction (gear shifting directions), thereby allowing for the travel state of the hybrid vehicle 1 to be switched to EV travel. As a result, travel with the engine 2 in an operational state can be minimized and an improvement in fuel economy can be achieved.

Furthermore, a shifting instruction that prompts a change to the engine shutdown-permitting gear step is issued only if the automatic engine shutdown conditions have been met, and if the engine 2 cannot be shut down because of the above-mentioned engine operating requirements, in other words, if no fuel economy effects can be obtained by prompting a gear change to the engine shutdown-permitting gear step, shifting instructions are prohibited, thereby making it possible to eliminate unnecessary shifting instructions unlikely to produce fuel economy effects.

### [Embodiment 2]

Although the description of Embodiment 1 above was based on an example, in which the present invention was applied to a hybrid vehicle HV having two motor generators MG1, MG2 installed therein, the present invention is not limited thereto and is also applicable to hybrid vehicles having one motor generator installed. A corresponding example will be described with reference to FIG. 18.

The hybrid vehicle of this example is an FR (front engine/rear drive)-type hybrid vehicle 200, which is provided with an engine 201, a motor generator (MG) 203, a transmission 205, an inverter 211 that drives the motor generator 203, a battery 212 that supplies electrical power used to drive the motor generator 203 and accumulates electrical power generated in the motor generator 203, and an ECU 210, etc., and in which the engine 201 and the motor generator 203 are coupled via a first clutch 202. In addition, the motor generator 203 is coupled to the transmission 205 via a second clutch 204. The "power transmission system" of the present invention is composed of the crankshaft of the engine 201, the first clutch 202, the motor generator 203, the second clutch 204, and the transmission 205, etc.

The engine 201 is a publicly-known power unit that outputs power by burning a fuel (an internal combustion engine), such as a gasoline engine, a diesel engine, and the like, which is adapted to be able to control the operating state, including the degree of throttle opening (intake air volume) of the throttle valve provided in the air intake conduit, fuel injection amount, ignition timing, and the like. In addition, after passing through a gas exhaust conduit (not shown) and undergoing purification by oxidative conversion on a catalyst, not shown, post-combustion exhaust gases are released into the atmosphere.

The transmission 205 is, for example, a stepped (planetary gear-type) automatic transmission, in which gear steps (forward: 6 steps, reverse: 1 step) are set using a planetary gear mechanism and friction engagement elements such as clutches and brakes.

In addition, in the hybrid vehicle 200 of this embodiment, blocking (releasing) the first clutch 202 and connecting (engaging) the second clutch 204 enables EV travel, during which the driving wheels (rear wheels) 206L and 206R are driven by the motor generator 203 alone. In addition, connecting (engaging) both the first clutch 202 and the second clutch 204 enables travel, during which the driving wheels 206L, 206R are driven by the driving power of the engine 201, and at the same time, makes it possible to generate assist torque or charge using the motor generator 203.

Here, the hybrid vehicle 200 of this embodiment, which is provided with a shift actuator 9 and paddle switches 9c, 9d etc., such as the ones illustrated in FIG. 2, is adapted in such a manner that when the shift lever 91 of the shift actuator 9 is switched from Position D to Position S (S mode), an S-mode signal is outputted from a shift position sensor (not shown) to the ECU 210 and the vehicle switches to an S mode that permits range switching operations based on sequential shiftmatic.

Furthermore, the hybrid vehicle 200 of this embodiment is provided with a display unit used for gear shifting instructions, which is a functional unit constituting a gear shift indicator such as the combination meter 6 (see FIG. 8) equipped with an upshift lamp 67, which is illuminated when indicating to shift the gear step up, and a downshift lamp 68, which is illuminated when indicating to shift the gear step down. It should be noted that the illumination of the upshift lamp 67 and downshift lamp 68 is controlled by the ECU 210.

Additionally, in the hybrid vehicle 200 of this embodiment, control equivalent to the S-mode shifting instruction control (the control routine of FIG. 10 and FIG. 11) described in the above-mentioned Embodiment 1 may be exercised so as to prompt the driver to change to the gear step (6th) that allows for the engine to be shut down.

In addition, control equivalent to the shifting instruction control for EV travel (the control routine of FIG. 12) described in Variation 1-1 of the above-mentioned Embodiment 1 may be exercised so as to prompt the driver to change to the gear step (6th) that allows for the engine to be shut down.

In addition, control equivalent to the shifting instruction control for EV travel (the control routines of FIG. 14 and FIG. 15) described in Variation 1-2 of the above-mentioned Embodiment 1 may be exercised so as to prompt the driver to change to the gear step (3rd) that allows for the engine to be shut down.

Furthermore, control equivalent to the shifting instruction control for EV travel (the control routine of FIG. 16) described in Variation 1-3 of the above-mentioned Embodiment 1 may be exercised so as to prompt the driver to change to the gear steps (3^{rd}, 2^{nd}, or 1^{st}) that allow for the engine to be shut down.

In this manner, in the present embodiment, if engine shutdown is possible (EV travel is possible) in the S-mode, the driver is prompted to change to the gear step that permits engine shutdown, which allows for the travel state of the hybrid vehicle 200 to be switched to EV travel and thus achieves an improvement in fuel economy.

Here, in the hybrid vehicle 200 of FIG. 18, the operating point of the motor generator 203 changes if the transmission ratio (the gear step) of the transmission 205 is changed. For this reason, for example, as shown in FIG. 19, when the transmission ratio is changed, the operating point of the motor generator MG in some cases changes from the EV travel-enabled region to the EV travel-disabled region (the operating range of the engine) (Px→Py), and in some cases changes from the EV travel-disabled region (the operating range of the engine) to an EV travel-enabled region (Py→Px).

For this reason, if control of the type used in Embodiment 1 is exercised in the hybrid vehicle 200 of this embodiment, it may result in engine shutdown and initial gear hunting. Specifically, for example, when the current gear step of the transmission 205 reaches the engine shutdown-permitting gear step and a transition to EV travel takes place (an upshift causes a transition to the EV travel-enabled region illustrated in FIG. 19 (Py→Px)), sometimes, for example, the required driving force (required torque) increases and the operating points of the motor generator MG move from the V travel-enabled region to the EV travel-disabled region, and sometimes the engine is started immediately after switching to EV travel.

In order to eliminate such problems, a configuration may adopted, in which the driver is prompted to change to a gear step that allows for the engine 201 to be shut down only if the acceleration requirements of the hybrid vehicle 200 are low or if it is estimated that the low acceleration requirement conditions are highly likely to continue. More specifically, if the speed of the hybrid vehicle 200 is low, the required driving force is low, the hybrid vehicle 200 is traveling in a steady manner, and the travel mode is a non-power mode (if control can be exercised to switch between the power mode and non-power mode (regular mode)) or the EV switch is ON, it is determined that the low acceleration requirement conditions are highly likely to continue and the driver is prompted to change to a gear step that allows for the engine to be shut down.

As a result, the operating points of the motor generator 203 no longer fall within the EV travel-disabled region when the transmission 205 is shifted to the engine shutdown-permitting gear step. This makes it possible to avoid situations, in which the engine is started immediately upon switching to EV travel.

It should be noted that the transmission 205 in Embodiment 2 may be a continuously variable transmission, such as a belt-driven continuously variable transmission, etc.

### - Other Embodiments -

In the present invention, during motor-driven travel (during EV travel) in the manual shifting mode (in the S mode), gear shifting instructions may be only issued in order to continue (maintain) the EV travel state so that no gear shifting instructions permitting engine shutdown are issued once the engine is started.

While Embodiment 1 above is based on an example, in which the present invention is applied to an FF-type hybrid vehicle HV, the present invention is not limited thereto and can be applied to FR-type or four-wheel drive hybrid vehicles.

While Embodiment 1 above is based on an example, in which the present invention is applied to the so-called split-type hybrid vehicles HV provided with two motor generators MG1, MG2 and a power splitting mechanism 3, the present invention is not limited thereto and may be applied to the so-called serial or parallel hybrid vehicles. It should be noted that "serial hybrid vehicles" are hybrid vehicles, in which the engine is used only for generation by the electric generator and the driving wheels are driven only by the motor, whereas "parallel hybrid vehicles" are hybrid vehicles, in which the driving wheels are driven by the engine and the motor.

Although Embodiment 1 and Embodiment 2 above are based on examples, in which the present invention is applied to the control of hybrid vehicles with two motor generators or one motor generator, the present invention is applicable to the control of hybrid cars provided with three or more motor generators, with at least one among them used for vehicle travel power assist purposes.

It should be noted that in the present invention the gear shifting system is applicable both to range hold type systems (permitting automatic shifting to lower gear steps for selected gear steps) and to gear hold type systems (in which the selected gear step is maintained). As used herein, the term "range hold type" refers to control, in which automatic gear shifting is performed within a limited gear step range, where the hybrid ECU 10 etc. uses the current gear step as the uppermost gear step and the uppermost gear step is used as the highest gear step (lowest transmission ratio) when the shift lever is in the sequential position (Position S). For example, if the gear step in the manual shifting mode is the 3rd speed step (3rd), the third speed step is used as the uppermost gear step and automatic gear shifting is enabled between the third speed step (3rd) and the first speed step (1st).

### [Industrial Applicability]

The present invention can be efficiently used for gear shifting instruction control in the manual shifting mode in a hybrid vehicle provided with an engine and an electric motor (motor generator or motor) as power sources used for travel and a gear shift indicator that prompts the driver to change gears.

### [Reference Signs List]

- 1, 200: Hybrid vehicles
- 2, 201: Engines
- 3: Power splitting mechanism
- 6a, 6b, 206L, 206R: Driving wheels
- 10: Hybrid ECU
- 16: GSI-ECU
- 24: Battery
- 52: Accelerator opening sensor
- 54: Vehicle speed sensor
- 67: Upshift lamp
- 68: Downshift lamp
- MG1: First motor generator
- MG2: Second motor generator
- 203: Motor generator

## Claims

1. A controller for a hybrid vehicle (1, 200), the hybrid vehicle comprising: an engine (2, 201) capable of outputting power for travel; an electric motor (MG1, MG2; 203) capable of outputting power for travel; a power transmission system (2a, 3, MG1, MG2, 7, 3e; 201, 202, 203, 204, 205, ...) permitting power transmission to driving wheels (6a, 6b, 206L, 206R) along with manual selection of gear steps; and a gear shift indicator (16,67;68) prompting a driver to change the gear steps;
the controller being **characterized in that**,
among the gear steps selectable in the power transmission system, one or more gear steps allowing the engine to be shut down and one or more gear steps not allowing the engine to be shut down are set in advance;
during the manual shifting mode (S), in which the gear steps are shifted manually, the controller determines whether automatic engine shutdown conditions have been met in a state in which the engine (2, 201) is operated, and when the current gear step of the power transmission system at a time when the automatic engine shutdown conditions have been met is one of the gear step(s) (1^{st}-5^{th}; 4^{th} -6^{th}) that do not allow the engine to be shut down, the gear shift indicator prompts the driver to change the current gear step to one of the gear step(s) (6^{th}; 1^{st}-3^{rd}) that allows the engine to be shut down, and
the change to the gear step (6^{th}; 1^{st}-3^{rd}) that allows the engine to be shut down is to change a transmission ratio, which is a ratio of the rotational speed of the engine (Ne) to the rotational speed (Nr) of a drive shaft (3e) of the power transmission system, while keeping the engine operated.

2. The controller for a hybrid vehicle according to claim 1,
wherein if the current gear step of the power transmission system is a gear step (6^{th}; 1^{st}-3^{rd}) that allows for the engine to be shut down during the manual shifting mode (S), in which the gear steps are shifted manually, the engine (2, 201) is shut down and the vehicle is switched to motor-driven travel, during which travel is accomplished under the power of the electric motor (MG1, MG2; 203) alone.

3. The controller for a hybrid vehicle according to claim 1,
wherein during motor-driven travel accomplished under the power of the electric motor (MG1, MG2; 203) alone in the manual shifting mode (S), in which the gear steps are shifted manually, gear shifting instructions from the gear shift indicator (16,67;68) are prohibited and no gear shifting instructions are issued.

4. The controller for a hybrid vehicle according any of claims 1 to 3,
wherein if the engine is shut down when the gear step is a gear step (6th; 1^{st}-3^{rd}), in which the shutdown of the engine is allowed, a prompt is provided to change to the gear step, in which the shutdown of the engine is allowed, and if the engine is not shut down even though it is in a gear step, in which the shutdown of the engine is allowed, a prompt is provided for a change of a different type than said change.

5. The controller for a hybrid vehicle according to any of claims 1 to 4,
wherein a gear step (6^{th}) that allows for the engine to be shut down is set and the gear shift indicator (16,67) provides a prompt to change to said gear step when the vehicle state enters a region allowing for the engine to be shut down.

6. The controller for a hybrid vehicle according to any of claims 1 to 5,
wherein the power transmission system is configured such that there is provided a continuously variable transmission mechanism (205) that allows for transmission ratios to be switched in a continuously variable manner and, in the manual shifting mode, the transmission ratios set by the continuously variable transmission mechanism are switched in a plurality of steps.

7. The controller for a hybrid vehicle according to claim 6,
wherein the controller is configured such that there is provided a power splitting mechanism (3) made up of a planetary gear mechanism comprising a planetary carrier (3d) coupled to an output shaft (2a) of the engine, a sun gear (3a) coupled to a first electric motor (MG1), and a ring gear (3b) coupled to a second electric motor (MG2), and
transmission ratios in the power transmission system can be changed by changing the rotational speed of the engine by controlling the rotational speed of the first electric motor.

8. The controller for a hybrid vehicle (200) according to any of claims 1 to 5,
which comprises the engine and the electric motor and in which a stepped transmission (205) that allows for manual gear step selection is provided in a powertrain between the electric motor (203) and the driving wheels.

9. The controller for a hybrid vehicle according to any of claims 1 to 8,
wherein the driver is prompted to change to the gear step (6^{th}) that allows for the engine to be shut down only if acceleration requirements of the vehicle are low or if it is estimated that low acceleration requirement conditions are highly likely to continue.

10. The controller for a hybrid vehicle according to Claim 9,
wherein it is determined that low acceleration requirement conditions are highly likely to continue when an EV switch is turned ON.

## Patentansprüche

1. Steuerung für ein Hybridfahrzeug (1, 200), wobei das Hybridfahrzeug umfasst:
einen Verbrennungsmotor (2, 201), der in der Lage ist, Energie zum Fahren auszugeben, einen Elektromotor (MG1, MG2; 203), der in der Lage ist, Energie zum Fahren auszugeben, ein Energieübertragungssystem (2a, 3, MG1, MG2, 7, 3e; 201, 202, 203, 204, 205, ...), das eine Energieübertragung auf Antriebsräder (6a, 6b, 206L, 206R) zusammen mit einer manuellen Auswahl von Gangstufen zulässt, und eine Gangschaltanzeige (16, 67; 68), die einen Fahrer auffordert, die Gangstufen zu wechseln,
wobei die Steuerung **dadurch gekennzeichnet ist, dass**
unter den in dem Energieübertragungssystem auswählbaren Gangstufen eine oder mehrere Gangstufen, die das Abschalten des Verbrennungsmotors erlauben, und eine oder mehrere Gangstufen, die das Abschalten des Verbrennungsmotors nicht erlauben, im Voraus eingestellt werden,
während des manuellen Schaltmodus (S), in dem die Gangstufen manuell geschaltet werden, die Steuerung bestimmt, ob Bedingungen für eine automatische Abschaltung des Verbrennungsmotors in einem Zustand erfüllt sind, in dem der Verbrennungsmotor (2, 201) betrieben wird, und wenn die aktuelle Gangstufe des Energieübertragungssystems zu einem Zeitpunkt, zu dem die Bedingungen für eine automatische Abschaltung des Verbrennungsmotors erfüllt sind, eine der Gangstufen (1.-5.; 4.-6.) ist, die nicht erlauben, dass der Verbrennungsmotor abgeschaltet wird, die Gangschaltanzeige den Fahrer auffordert, die aktuelle Gangstufe in eine der Gangstufen (6.; 1.-3.) zu wechseln, die erlaubt, dass der Verbrennungsmotor abgeschaltet wird, und
der Wechsel in die Gangstufe (6.; 1.-3.), die erlaubt, das der Verbrennungsmotor abgeschaltet wird, darin besteht, ein Übertragungsverhältnis zu wechseln, das ein Verhältnis der Drehzahl des Verbrennungsmotors (Ne) zu der Drehzahl (Nr) einer Antriebswelle (3e) des Energieübertragungssystems ist, während der Verbrennungsmotor weiter in Betrieb gehalten wird.

2. Steuerung für ein Hybridfahrzeug nach Anspruch 1,
wobei, wenn die aktuelle Gangstufe des Energieübertragungssystems eine Gangstufe (6.; 1.-3.) ist, die während des manuellen Schaltmodus (S), in dem die Gangstufen manuell geschaltet werden, erlaubt, dass der Verbrennungsmotor abgeschaltet wird, der Verbrennungsmotor (2, 201) abgeschaltet wird und das Fahrzeug auf elektromotorangetriebene Fahrt umgeschaltet wird, wobei die Fahrt unter der Energie des Elektromotors (MG1, MG2; 203) allein erfolgt.

3. Steuerung für ein Hybridfahrzeug nach Anspruch 1,
wobei während einer elektromotorangetriebenen Fahrt, die unter der Energie des Elektromotors (MG1, MG2; 203) allein erfolgt, in dem manuellen Schaltmodus (S), in dem die Gangstufen manuell geschaltet werden, Gangschaltanweisungen von der Gangschaltanzeige (16, 67; 68) verboten sind und keine Gangschaltanweisungen ausgegeben werden.

4. Steuerung für ein Hybridfahrzeug nach einem der Ansprüche 1 bis 3,
wobei, wenn der Verbrennungsmotor abgeschaltet wird, wenn die Gangstufe eine Gangstufe (6.; 1.-3.) ist, in der das Abschalten des Verbrennungsmotors erlaubt ist, eine Aufforderung bereitgestellt wird, die Gangstufe zu wechseln, in der das Abschalten des Verbrennungsmotors erlaubt ist, und wenn der Verbrennungsmotor nicht abgeschaltet wird, obwohl er sich in einer Gangstufe befindet, in der das Abschalten des Verbrennungsmotors erlaubt ist, eine Aufforderung für einen Wechsel eines anderen Typs als der besagte Wechsel bereitgestellt wird.

5. Steuerung für ein Hybridfahrzeug nach einem der Ansprüche 1 bis 4,
wobei eine Gangstufe (6.), die erlaubt, dass der Verbrennungsmotor abgeschaltet wird, eingestellt wird und die Gangschaltanzeige (16, 67) eine Aufforderung zum Wechseln in die Gangstufe bereitstellt, wenn der Fahrzeugzustand in einen Bereich eintritt, der erlaubt, dass der Verbrennungsmotor abgeschaltet wird.

6. Steuerung für ein Hybridfahrzeug nach einem der Ansprüche 1 bis 5,
wobei das Energieübertragungssystem derart ausgestaltet ist, dass ein stufenloser Übertragungsmechanismus (205) bereitgestellt wird, der erlaubt, dass Übertragungsverhältnisse in einer stufenlosen Weise umgeschaltet werden, und in dem manuellen Schaltmodus die durch den stufenlosen Übertragungsmechanismus eingestellten Übertragungsverhältnisse in mehreren Schritten umgeschaltet werden.

7. Steuerung für ein Hybridfahrzeug nach Anspruch 6,
wobei die Steuerung derart ausgestaltet ist, dass ein Energieaufteilungsmechanismus (3) bereitgestellt wird, der aus einem Planetengetriebemechanismus, der einen Planetenträger (3d) umfasst, der mit einer Abtriebswelle (2a) des Verbrennungsmotors gekoppelt ist, einem Sonnenrad (3a), das mit einem ersten Elektromotor (MG1) gekoppelt ist, und einem Hohlrad (3b), das mit einem zweiten Elektromotor (MG2) gekoppelt ist, besteht, und
Übersetzungsverhältnisse in dem Energieübertragungssystem durch Wechseln der Drehzahl des Verbrennungsmotors durch Steuern der Drehzahl des ersten Elektromotors gewechselt werden können.

8. Steuerung für ein Hybridfahrzeug (200) nach einem der Ansprüche 1 bis 5,
das den Verbrennungsmotor und den Elektromotor umfasst und bei dem eine abgestufte Übertragung (205), die eine manuelle Gangstufenauswahl erlaubt, in einem Antriebsstrang zwischen dem Elektromotor (203) und den Antriebsrädern bereitgestellt wird.

9. Steuerung für ein Hybridfahrzeug nach einem der Ansprüche 1 bis 8,
wobei der Fahrer nur dann aufgefordert wird, in die Gangstufe (6.) zu wechseln, die erlaubt, dass der Verbrennungsmotor abgeschaltet wird, wenn die Beschleunigungsanforderungen des Fahrzeugs niedrig sind oder wenn geschätzt wird, dass Bedingungen für niedrige Beschleunigungsanforderungen höchstwahrscheinlich anhalten.

10. Steuerung für ein Hybridfahrzeug nach Anspruch 9,
wobei bestimmt wird, dass Bedingungen für niedrige Beschleunigungsanforderungen höchstwahrscheinlich anhalten, wenn ein EV-Schalter eingeschaltet ist.

## Revendications

1. Dispositif de commande pour un véhicule hybride (1, 200), le véhicule hybride comprenant : un moteur thermique (2, 201) capable de délivrer de la puissance pour le déplacement ; un moteur électrique (MG1, MG2 ; 203) capable de délivrer de la puissance pour le déplacement ; un système de transmission de puissance (2a, 3, MG1, MG2, 7, 3e ; 201, 202, 203, 204, 205, ...) permettant une transmission de puissance à des roues motrices (6a, 6b, 206L, 206R) avec une sélection manuelle des vitesses ; et un indicateur de changement de vitesse (16, 67 ; 68) qui incite un conducteur à changer les vitesses ;
le dispositif de commande étant **caractérisé en ce que**,
parmi les vitesses pouvant être sélectionnées dans le système de transmission de puissance, une ou plusieurs vitesses permettant au moteur thermique d'être arrêté et une ou plusieurs vitesses ne permettant pas au moteur thermique d'être arrêté sont établies à l'avance ;
pendant le mode de changement de vitesse manuel (S), dans lequel les vitesses sont changées manuellement, le dispositif de commande détermine si des conditions d'arrêt automatique de moteur thermique ont été remplies dans un état dans lequel le moteur thermique (2, 201) est mis en œuvre, et quand la vitesse courante du système de transmission de puissance à un moment auquel les conditions d'arrêt automatique de moteur thermique ont été remplies est l'une de la ou des vitesses (1^{ère} à 5^{ème} ; 4^{ème} à 6^{ème}) qui ne permettent pas au moteur thermique d'être arrêté, l'indicateur de changement de vitesse incite le conducteur à changer la vitesse courante vers une de la ou des vitesses (6^{ème} ; 1^{ère} à 3^{ème}) qui permet au moteur thermique d'être arrêté, et
le changement vers la vitesse (6^{ème} ; 1^{ère} à 3^{ème}) qui permet au moteur thermique d'être arrêté est pour changer un rapport de transmission, qui est un rapport de la vitesse de rotation du moteur thermique (Ne) sur la vitesse de rotation (Nr) d'un arbre d'entraînement (3e) du système de transmission de puissance, tout en maintenant le moteur thermique en fonctionnement.

2. Dispositif de commande pour un véhicule hybride selon la revendication 1,
dans lequel, si la vitesse courante du système de transmission de puissance est une vitesse (6^{ème} ; 1^{ère} à 3^{ème}) qui permet au moteur thermique d'être arrêté pendant le mode de changement de vitesse manuel (S), dans lequel les vitesses sont changées manuellement, le moteur thermique (2, 201) est arrêté et le véhicule est commuté vers un déplacement entraîné par moteur électrique, pendant lequel le déplacement est réalisé avec la puissance du moteur électrique (MG1, MG2 ; 203) seulement.

3. Dispositif de commande pour un véhicule hybride selon la revendication 1,
dans lequel, pendant le déplacement entraîné par moteur électrique réalisé avec la puissance du moteur électrique (MG1, MG2 ; 203) seulement dans le mode de changement de vitesse manuel (S), dans lequel les vitesses sont changées manuellement, des instructions de changement de vitesse provenant de l'indicateur de changement de vitesse (16, 67 ; 68) sont interdites et aucune instruction de changement de vitesse n'est délivrée.

4. Dispositif de commande pour un véhicule hybride selon l'une quelconque des revendications 1 à 3,
dans lequel, si le moteur thermique est arrêté quand la vitesse est une vitesse (6^{ème} ; 1^{ère} à 3^{ème}), dans laquelle l'arrêt du moteur thermique est permis, une invitation à changer de vitesse est émise, pour la vitesse dans laquelle l'arrêt du moteur thermique est permis, et si le moteur thermique n'est pas arrêté bien qu'il soit dans une vitesse, dans laquelle l'arrêt du moteur thermique est permis, une invitation est émise pour un changement d'un type différent dudit changement.

5. Dispositif de commande pour un véhicule hybride selon l'une quelconque des revendications 1 à 4,
dans lequel une vitesse (6^{ème}) qui permet au moteur thermique d'être arrêté est établie et l'indicateur de changement de vitesse (16, 67) émet une invitation à changer à ladite vitesse quand l'état de véhicule entre dans une zone qui permet au moteur thermique d'être arrêté.

6. Dispositif de commande pour un véhicule hybride selon l'une quelconque des revendications 1 à 5,
dans lequel le système de transmission de puissance est configuré de telle sorte qu'est prévu un mécanisme de transmission à variation continue (205) qui permet à des rapports de transmission d'être commutés d'une manière à variation continue et, dans le mode de changement de vitesse manuel, les rapports de transmission établis par le mécanisme de transmission à variation continue sont commutés dans une pluralité de paliers.

7. Dispositif de commande pour un véhicule hybride selon la revendication 6,
dans lequel le dispositif de commande est configuré de telle sorte qu'est prévu un mécanisme de division de puissance (3) composé d'un mécanisme d'engrenage planétaire comportant un porte-satellite (3d) couplé à un axe de sortie (2a) du moteur thermique, d'un pignon central (3a) couplé à un premier moteur électrique (MG1), et d'une couronne dentée (3b) couplée à un deuxième moteur électrique (MG2), et
des rapports de transmission dans le système de transmission de puissance peuvent être changés en changeant la vitesse de rotation du moteur thermique en commandant la vitesse de rotation du premier moteur électrique.

8. Dispositif de commande pour un véhicule hybride (200) selon l'une quelconque des revendications 1 à 5,
qui comprend le moteur thermique et le moteur électrique et dans lequel une transmission étagée (205) qui permet une sélection manuelle de vitesse est prévue dans un train moteur entre le moteur électrique (203) et les roues motrices.

9. Dispositif de commande pour un véhicule hybride selon l'une quelconque des revendications 1 à 8,
dans lequel le conducteur est incité à changer vers la vitesse (6^{ème}) qui permet au moteur thermique d'être arrêté seulement si des exigences d'accélération du véhicule sont faibles ou si l'on estime que des conditions de faible exigence d'accélération sont fortement susceptibles de continuer.

10. Dispositif de commande pour un véhicule hybride selon la revendication 9,
dans lequel on détermine que des conditions de faible exigence d'accélération sont fortement susceptibles de continuer quand un commutateur EV est sur MARCHE.
